# EUROPEAN PATENT APPLICATION

(11) **EP 4 842 092 A1**
(43) Date of publication of application: **18.11.2026**
(21) Application number: 25744527.0
(22) Date of filing: 20.01.2025
(51) Int. Cl.: H04W 64/00

(54) **DEVICE USED FOR WIRELESS COMMUNICATION SYSTEM, AND METHOD**

(30) Priority: 22.01.2024 CN 202410088821
(71) Applicant: Sony Group Corporation, Tokyo 108-0075 (JP)
(72) Inventor: BAI, Yingshuang, Beijing 100027 (CN); SUN, Chen, Beijing 100027 (CN); CUI, Tao, Beijing 100027 (CN)
(74) Representative: D Young & Co LLP
(86) International application number: PCT/CN2025/073218
(87) International publication number: WO 2025/157086

(57) **Abstract**

The present disclosure relates to a device used for a wireless communication system, and a method. For example, a user equipment may send to a location management function (LMF) in a core network a request message for model selection of a location model deployed at the user equipment, the request message at least comprising a user equipment capability of the user equipment, such that the LMF selects, at least on the basis of the request message, from a plurality of location models one or more location models to be deployed at the user equipment. Additionally or alternatively, the user equipment may send to the LMF a request message for model switching of location models, such that the LMF selects, at least on the basis of the request message, from a plurality of location models one or more update location models to be deployed at the user equipment. Additionally or alternatively, on the basis of the mobility of the user equipment, switching from one LMF to another LMF can be performed for management of a location service of the user equipment. Additionally or alternatively, a data analytics function (NWDAF) in the core network may be used to analyze the location precision.

## Description

### CROSS-REFERENCE TO RELATED APPLICATIONS

This application is based on and claims priority to Chinese patent application with application number 202410088821.9, titled "DEVICE USED FOR WIRELESS COMMUNICATION SYSTEM, AND METHOD", filed on January 22, 2024, the entire content of which is incorporated herein by reference.

### TECHNICAL FIELD

The present disclosure generally relates to technologies for use in wireless communication systems, and specifically relates to technologies applying Artificial Intelligence (AI) / Machine Learning (ML) and the like to positioning functions in wireless communication systems.

### BACKGROUND

Wireless communication systems may use various protocols and standards for data transmission between devices. These protocols and standards have undergone long-term development, including but not limited to the 3rd Generation Partnership Project (3GPP), 3GPP Long Term Evolution (LTE) (e.g., 4G communication), and 3GPP New Radio (NR) (e.g., 5G communication), and even 6G communication. Compared with traditional wireless communication systems, new wireless communication systems (such as 5G NR communication systems and 6G communication systems) have greatly improved in terms of speed, latency, capacity, flexibility, and reliability of wireless transmission, providing more possibilities for new usage modes.

In a wireless communication system, in order to support location estimation in a terrestrial wireless network, a network device may estimate the location of a mobile user equipment by measuring radio frequency (RF) reference signals from the mobile user equipment, thereby achieving positioning. A Location Management Function (LMF) entity associated with a positioning procedure is located on a core network side, which may calculate or estimate a final location of the user equipment.

As an example, in a traditional core network-assisted positioning process, relative location between a network device and a user equipment may be determined by calculating parameters such as a time difference between uplink and downlink signals and an angle of arrival/departure of signals according to actual measurement results of positioning reference signals reported by the user equipment. Since there are also issues such as mobility and privacy of the user equipment during the positioning process, other network element devices in the core network (e.g., a Gateway Mobile Location Centre (GMLC), an Access and Mobility Management Function (AMF), a Unified Data Repository (UDR), an NRF, etc.) may be appropriately introduced to assist the LMF, thereby achieving location estimation for a target user equipment. This location estimation result may include a location based on an Earth coordinate system, and may also include a location based on a cell-level local coordinate system. It should be understood that the location estimation result may also include an estimation of a moving speed of the user equipment and/or an accuracy analysis of the location estimation. Whenever necessary, the LMF may also obtain additional information based on auxiliary positioning of a Global Navigation Satellite System (GNSS) and a Positioning Reference Unit (PRU) to achieve further positioning of the user equipment.

However, positioning functions in current wireless communication systems usually require multiple measurements, calculations, and a series of interactions between devices, making it impossible to obtain a good trade-off between positioning efficiency and accuracy. Therefore, an enhanced positioning service capable of further improving positioning accuracy and efficiency is needed.

### SUMMARY

The present disclosure proposes devices and methods for use in wireless communication systems. More specifically, the present disclosure proposes technical solutions for applying technologies such as artificial intelligence/machine learning to positioning functions in wireless communication systems, wherein specific communication procedures and related parameters are designed for various aspects such as training, selection, and switching of positioning models, thereby improving positioning accuracy and efficiency. In addition, the present disclosure also supports switching of LMFs and analysis of positioning accuracy, which can further enhance positioning services.

According to a first aspect of the present disclosure, there is provided an electronic device for a user equipment in a wireless communication system, the electronic device comprising at least one processor and at least one memory including computer program instructions, wherein the at least one memory and the computer program instructions are configured to, via the at least one processor, cause the user equipment to: perform training for a positioning model deployed at the user equipment, wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.

Correspondingly, according to the first aspect of the present disclosure, there is also provided a method for a user equipment in a wireless communication system. The method comprises: performing training for a positioning model deployed at the user equipment, wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.

According to a second aspect of the present disclosure, there is provided an electronic device for a core network device in a core network, the electronic device comprising at least one processor and at least one memory including computer program instructions, wherein the at least one memory and the computer program instructions are configured to, via the at least one processor, cause the core network device to: perform training for a positioning model deployed at the core network device, wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.

Correspondingly, according to the second aspect of the present disclosure, there is also provided a method for a core network device in a core network. The method comprises: performing training for a positioning model deployed at the core network device, wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.

According to a third aspect of the present disclosure, there is provided an electronic device for a user equipment in a wireless communication system, the electronic device comprising at least one processor and at least one memory including computer program instructions, wherein the at least one memory and the computer program instructions are configured to, via the at least one processor, cause the user equipment to: send a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.

Correspondingly, according to the third aspect of the present disclosure, there is also provided a method for a user equipment in a wireless communication system. The method comprises: sending a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.

According to a fourth aspect of the present disclosure, there is provided an electronic device for a user equipment in a wireless communication system, the electronic device comprising at least one processor and at least one memory including computer program instructions, wherein the at least one memory and the computer program instructions are configured to, via the at least one processor, cause the user equipment to: send a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.

Correspondingly, according to the fourth aspect of the present disclosure, there is also provided a method for a user equipment in a wireless communication system. The method comprises: sending a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.

According to a fifth aspect of the present disclosure, there is provided an electronic device for a core network device in a core network, the electronic device comprising at least one processor and at least one memory including computer program instructions, wherein the at least one memory and the computer program instructions are configured to, via the at least one processor, cause the core network device to: determine, based on Location Management Function (LMF) profile information, to switch from a first LMF in the core network to a second LMF for positioning of a user equipment in a wireless communication system, wherein the LMF profile information comprises at least an identifier of the first LMF and an identifier or a functionality identifier of a supported positioning model, and an identifier of the second LMF and an identifier or a functionality identifier of a supported positioning model.

Correspondingly, according to the fifth aspect of the present disclosure, there is also provided a method for a core network device in a core network. The method comprises: determining, based on Location Management Function (LMF) profile information, to switch from a first LMF in the core network to a second LMF for positioning of a user equipment in a wireless communication system, wherein the LMF profile information comprises at least an identifier of the first LMF and an identifier or a functionality identifier of a supported positioning model, and an identifier of the second LMF and an identifier or a functionality identifier of a supported positioning model.

According to a sixth aspect of the present disclosure, there is provided an electronic device for a Location Management Function (LMF) in a core network, the electronic device comprising at least one processor and at least one memory including computer program instructions, wherein the at least one memory and the computer program instructions are configured to, via the at least one processor, cause the LMF to: send information associated with a positioning model to a Network Data Analytics Function (NWDAF) in the core network, causing the NWDAF to analyze the information to obtain positioning accuracy of the positioning model regarding a user equipment in a wireless communication system.

Correspondingly, according to the sixth aspect of the present disclosure, there is also provided a method for a Location Management Function (LMF) in a core network. The method comprises: sending information associated with a positioning model to a Network Data Analytics Function (NWDAF) in the core network, causing the NWDAF to analyze the information to obtain positioning accuracy of the positioning model regarding a user equipment in a wireless communication system.

According to a seventh aspect of the present disclosure, there is provided a computer-readable storage medium having one or more instructions stored thereon, which, when executed by one or more processors of an electronic device, cause the electronic device to perform the method according to various embodiments of the present disclosure.

According to an eighth aspect of the present disclosure, there is provided a computer program product comprising program instructions, which, when executed by one or more processors of a computer, cause the computer to perform the method according to various embodiments of the present disclosure.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure may be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the present disclosure and to explain the principles and advantages of the present disclosure, among which:
FIG. 1 illustrates an example architecture diagram of a wireless communication system according to an embodiment of the present disclosure.
FIG. 2 illustrates an exemplary electronic device for a user equipment according to an embodiment of the present disclosure.
FIG. 3 illustrates an exemplary electronic device for a core network device according to an embodiment of the present disclosure.
FIG. 4 illustrates a flowchart of communication interaction according to a first embodiment of the present disclosure.
FIGS. 5A-5B illustrate flowcharts of communication interaction according to a second embodiment of the present disclosure.
FIG. 6 illustrates a flowchart of communication interaction according to a third embodiment of the present disclosure.
FIG. 7 illustrates a flowchart of communication interaction according to a fourth embodiment of the present disclosure.
FIG. 8 illustrates a flowchart of communication interaction according to a sixth embodiment of the present disclosure.
FIG. 9 illustrates a flowchart of an example method for a user equipment in a wireless communication system according to the first embodiment of the present disclosure.
FIG. 10 illustrates a flowchart of an example method for a core network device in a wireless communication system according to the second embodiment of the present disclosure.
FIG. 11 illustrates a flowchart of an example method for a user equipment in a wireless communication system according to the third embodiment of the present disclosure.
FIG. 12 illustrates a flowchart of an example method for a user equipment in a wireless communication system according to the fourth embodiment of the present disclosure.
FIG. 13 illustrates a flowchart of an example method for a core network device in a wireless communication system according to the fifth embodiment of the present disclosure.
FIG. 14 illustrates a flowchart of an example method for a core network device in a wireless communication system according to the sixth embodiment of the present disclosure.
FIG. 15 is a block diagram of an example structure of a personal computer as an information processing device that may be employed in an embodiment of the present disclosure.
FIG. 16 is a block diagram showing a first example of a schematic configuration of a base station to which the technology of the present disclosure may be applied.
FIG. 17 is a block diagram showing a second example of a schematic configuration of a base station to which the technology of the present disclosure may be applied.
FIG. 18 is a block diagram showing an example of a schematic configuration of a smart phone to which the technology of the present disclosure may be applied.
FIG. 19 is a block diagram showing an example of a schematic configuration of a car navigation device to which the technology of the present disclosure may be applied.

While the embodiments described in the present disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternatives falling within the spirit and scope of the claims.

### DETAILED DESCRIPTION

The following describes representative applications of various aspects of the device, method and the like according to the present disclosure. The description of these examples is merely to add context and help to understand the described embodiments. Therefore, it is clear to those skilled in the art that the embodiments described below may be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system comprises at least a network device and a user equipment, and the network device may provide communication services for one or more user equipments.

In the present disclosure, the term "network device" (or "base station", "control device") has the full breadth of its ordinary meaning and includes at least a wireless communication station that is a part of a wireless communication system or a radio system to facilitate communication. As an example, the network device may be an eNB of the 4G communication standard, a gNB of the 5G communication standard, a remote radio head, a wireless access point, a drone control tower, or a communication apparatus performing similar functions. In the present disclosure, "network device", "base station", and "control device" may be used interchangeably, or a "network device" may be implemented as a part of a "base station". Application examples will be described in detail below by taking a network device as an example in conjunction with the accompanying drawings.

In the present disclosure, the term "user equipment (UE)" or "terminal device" has the full breadth of its ordinary meaning and includes at least a terminal device that is a part of a wireless communication system or a radio system to facilitate communication. As an example, the user equipment may be, for example, a terminal device or an element thereof such as a mobile phone, a laptop, a tablet, an in-vehicle communication device, a wearable device, a sensor, and the like. In the present disclosure, "user equipment" (hereinafter may be simply referred to as "UE") and "terminal device" may be used interchangeably, or a "user equipment" may be implemented as a part of a "terminal device".

In the present disclosure, the term "network device side" / "base station side" has the full breadth of its ordinary meaning and usually indicates the side that transmits data in the downlink of a communication system or indicates the side that receives data in the uplink of a communication system. Similarly, the term "user equipment side" / "terminal device side" has the full breadth of its ordinary meaning and may correspondingly indicate the side that receives data in the downlink of a communication system or indicate the side that transmits data in the uplink of a communication system.

It should be noted that although the embodiments of the present disclosure are described below mainly based on a communication system comprising a network device and a user equipment, these descriptions may be correspondingly extended to cases of communication systems comprising any other type of network device side and user equipment side. For example, operations on the network device side may correspond to operations of a base station, while operations on the user equipment side may correspondingly correspond to operations of a terminal device.

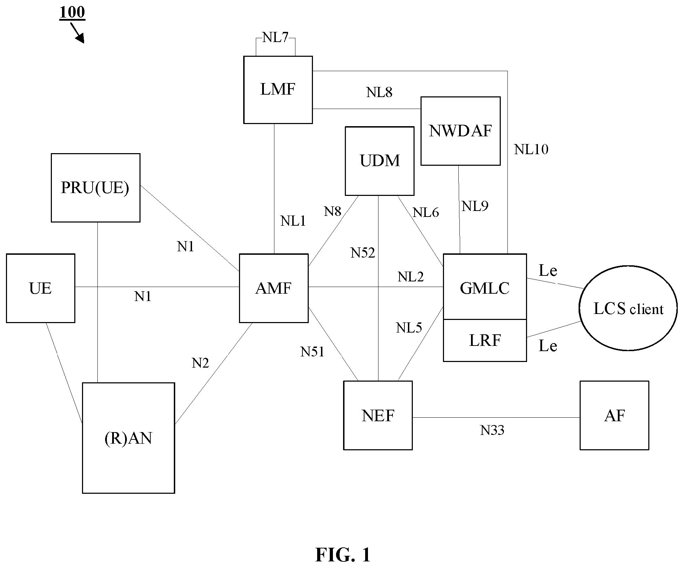

FIG. 1 illustrates an example architecture diagram of a wireless communication system according to an embodiment of the present disclosure. It should be understood that FIG. 1 only illustrates one of various types and possible arrangements of wireless communication systems; the features of the present disclosure may be implemented in any one of various systems as needed.

As shown in FIG. 1, the wireless communication system 100 includes one or more user equipments (e.g., UE devices) and one or more network devices (e.g., RAN devices, which may include a gNB, etc.). The network device and the user equipment may be configured to communicate over a wireless transmission medium. The network device may also be configured to communicate with a network (e.g., a core network of a cellular service provider, a telecommunications network such as a public switched telephone network (PSTN), and/or the Internet) over a wired medium (e.g., a cable). As an example, as shown in FIG. 1, the network device may be configured to communicate with other entities in the core network via an Access and Mobility Management Function (AMF) entity in the core network, and thereby communicate with a remote server. According to an embodiment of the present disclosure, the user equipment and/or the network device may communicate with a Location Management Function (LMF) in the core network via the AMF. The LMF may obtain location information of the user equipment and optionally may provide services of various location-related information for the user equipment in combination with a geographic information system. These services are collectively referred to as a Location Service (LCS). Specifically, the LMF may calculate or verify the location of the user equipment and estimate its moving speed. Optionally, the LMF may also estimate the accuracy of positioning. It should be understood that, during the positioning, the user equipment may be used as a Positioning Reference Unit (PRU).

It should be understood that network elements related to the positioning function in the core network may also include a Gateway Mobile Location Centre (GMLC), a Location Retrieval Function (LRF), and a Network Exposure Function (NEF). The GMLC contains functionalities that require support for location services. There may be more than one GMLC in the same Public Land Mobile Network (PLMN). The LRF may be located at the GMLC or may be independent of the GMLC in location. The LRF may retrieve or verify location information and provide routing and/or related information for user equipment (e.g., user equipment initiating Internet Protocol (IP) Multimedia System (IMS) emergency sessions). The NEF may provide a method to access location services through an external Access Function (AF) or an internal AF. Specifically, an AF may access location services from the NEF using an Application Programming Interface (API). According to Quality of Service (QoS) requirements, the NEF may forward location requests to the GMLC, or (optionally via Unified Data Management (UDM)) request event exposure of location information from a serving AMF. In addition, the network elements of the core network may include a Network Data Analytics Function (NWDAF), which may include an Analytics Logical Function (AnLF) and a Model Training Logical Function (MTLF). The NWDAF may analyze data input by multiple network elements. For example, the NWDAF may analyze positioning-related data from the GMLC, thereby outputting statistical results. Furthermore, the MTLF in the NWDAF may perform functions related to model training.

It should be understood that an LCS server side may request the location service of the user equipment, causing the network elements associated with the positioning function in the core network to communicate with the user equipment and/or the network device via the AMF, thereby obtaining location information of the user equipment.

Artificial intelligence is a newly emerging science in recent years for studying and developing technologies that are used to simulate, extend and expand human intelligence. As an example and not a limitation, the artificial intelligence algorithm may include one or more of the following: linear regression, logistic regression, a decision tree, naive Bayes, a support vector machine, a random forest, an artificial neural network, and K-nearest neighbor. Those skilled in the art should understand that machine learning belongs to a type of artificial intelligence technology, which may involve processes such as data collection, model training, and data analytics and inference. As an example, machine learning technologies may involve a Life Cycle Service (LCS). The LCS may include, but is not limited to, data collection, model training, model deployment, model inference, model selection, activation, deactivation, switching and fallback, model detection, model update, and model migration.

According to the embodiments of the present disclosure, applying artificial intelligence/machine learning technologies to the aforementioned new wireless communication systems can enable intelligentization and improve the working efficiency of network architectures. Those skilled in the art should recognize that applying artificial intelligence/machine learning technologies to location services in wireless communication systems will greatly improve positioning accuracy and efficiency. Currently, however, this kind of combination still lacks supporting standards for application in practical communication scenarios. Therefore, it is necessary to consider some technical solutions in practical communication scenarios so that existing wireless communication systems can support artificial intelligence/machine learning technologies to provide enhanced location services. For example, it is necessary to consider how to better achieve model deployment, model training, model selection, model switching, positioning analysis, etc. for the positioning function of the user equipment with the aid of the core network and network devices, thereby enhancing location services.

It should be understood that the embodiments of the present disclosure involve the core network participating in the positioning of the user equipment, and therefore may at least support the following three positioning modes:
- UE assisted mode: In this mode, the UE may obtain a location measurement result and send the measurement result to another entity (e.g., an LMF) to calculate a location;
- UE based mode: In this mode, the UE may utilize auxiliary data provided by the serving PLMN to obtain a location measurement result and calculate a location estimate;
- network based mode: In this mode, the serving PLMN obtains a location measurement result of a signal transmitted by a target UE and calculates a location estimate. The transmission of the UE signal may be transparent or non-transparent to the UE.

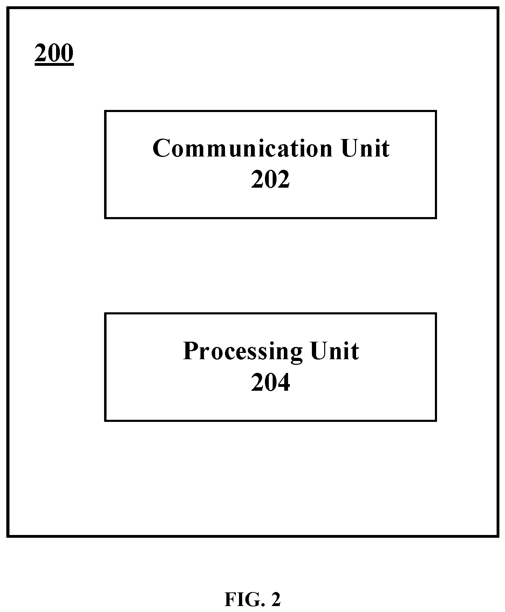

FIG. 2 illustrates an exemplary electronic device 200 for a user equipment (e.g., a "UE" device) in the system 100 according to an embodiment of the present disclosure. The electronic device 200 shown in FIG. 2 may include various units to implement various embodiments according to the present disclosure. In this example, the electronic device 200 includes a communication unit 202 and a control unit 204. In one implementation, the electronic device 200 is implemented as the user equipment itself or a part thereof, or is implemented as a device for controlling the user equipment or otherwise related to the user equipment or a part of such a device. Various operations described below in connection with the user equipment may be implemented by the units 202, 204 of the electronic device 200 or other possible units.

According to one embodiment of the present disclosure, the processing unit 204 may be configured to perform training for a positioning model deployed at the user equipment. In this embodiment, an input of the positioning model may comprise at least auxiliary positioning data obtained by the user equipment from an LMF in a core network and strength of a positioning reference signal measured by the user equipment itself. An output of the positioning model may comprise at least a positioning result of the user equipment.

Additionally or alternatively, according to another embodiment of the present disclosure, the communication unit 202 may be configured to send a request message for model selection of a positioning model deployed at the user equipment to an LMF in the core network via an AMF in the core network. This request message may include at least a user equipment capability of the user equipment, causing the LMF to select one or more positioning models from a plurality of positioning models for deployment at the user equipment based at least on the request message.

Additionally or alternatively, according to yet another embodiment of the present disclosure, the communication unit 202 may be configured to send a request message for model switching of a positioning model deployed at the user equipment to an LMF in the core network via an AMF in the core network. This request message may include at least a user equipment capability of the user equipment, causing the LMF to select one or more updated positioning models from a plurality of positioning models for deployment at the user equipment based at least on the request message.

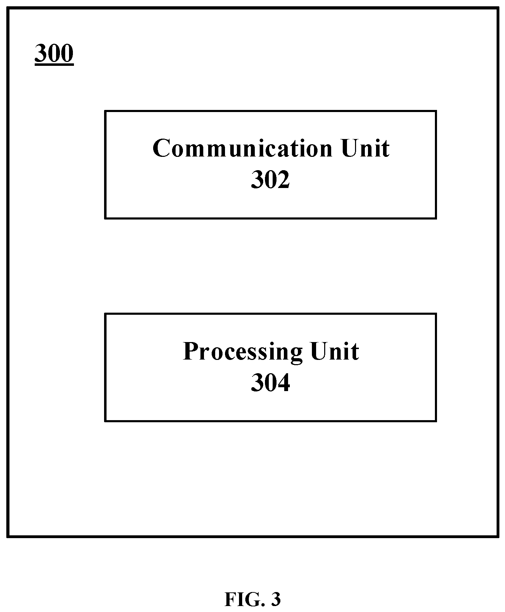

FIG. 3 illustrates an exemplary electronic device for a core network device according to an embodiment of the present disclosure. The electronic device 300 shown in FIG. 3 may include various units to implement various embodiments according to the present disclosure. In this example, the electronic device 300 includes a communication unit 302 and a processing unit 304. In one implementation, the electronic device 300 is implemented as the core network device itself or a part thereof, or is implemented as a device related to the core network device or a part of such a device. Various operations described below in connection with the core network device may be implemented by the units 302, 304 of the electronic device 300 or other possible units.

According to one embodiment of the present disclosure, the core network device may be an LMF or an NWDAF. The processing unit 304 may be configured to perform training for a positioning model deployed at the core network device. In this embodiment, an input of the positioning model may comprise at least auxiliary positioning data obtained by the core network device from a network device or a user equipment in a wireless communication system, the auxiliary positioning data correspondingly may include at least strength of a channel sounding reference signal from the user equipment measured by the network device or strength of a positioning reference signal measured by the user equipment itself. An output of the positioning model may comprise at least a positioning result of the user equipment.

Additionally or alternatively, according to another embodiment of the present disclosure, the core network device may be an LMF device, or it may be a GMLC device or an AMF device. In this embodiment, the processing unit 304 may determine, based on LMF profile information, to switch from a first LMF in the core network to a second LMF for positioning of a user equipment in a wireless communication system. The LMF profile information may comprise at least an identifier of the first LMF and an identifier or a functionality identifier of a positioning model supported by the first LMF, and an identifier of the second LMF and an identifier or a functionality identifier of a positioning model supported by the second LMF.

Additionally or alternatively, according to yet another embodiment of the present disclosure, the core network device may be an LMF. The communication unit 302 may be configured to send information associated with a positioning model to an NWDAF in the core network, causing the NWDAF to analyze the information to obtain positioning accuracy of the positioning model regarding a user equipment in a wireless communication system.

In some embodiments, the electronic device 200 or 300 may be implemented at a chip level, or may also be implemented at a device level by including other external components (e.g., a radio link, an antenna, etc.). For example, each electronic device may operate as a communication device as a whole machine.

It should be noted that the various units described above are merely logical modules divided according to the specific functions they implement, and are not intended to limit specific implementation; for example, they may be implemented in software, hardware, or a combination of software and hardware. In a hardware implementation, the hardware may be programmed or configured to perform a function. In a software or a combined software/hardware implementation, the software may be used to configure the hardware and/or a processor. In an actual implementation, the various units described above may be implemented as independent physical entities, or may also be implemented by a single entity (e.g., a processor (a CPU or a DSP, etc.), an integrated circuit, etc.). Wherein, a processing circuit may refer to various implementations of digital circuitry, analog circuitry, or mixed-signal (a combination of analog and digital) circuitry that perform functions in a computing system. The processing circuits may include, for example, a circuit such as an integrated circuit (IC), an application-specific integrated circuit (ASIC), a portion or circuit of an individual processor core, an entire processor core, an individual processor, a programmable hardware device such as a field programmable gate array (FPGA), and/or a system comprising multiple processors.

The present disclosure proposes novel technical solutions for applying artificial intelligence/machine learning technologies to a positioning function in a wireless communication system from six aspects: training of a positioning model deployed at a user equipment, training of a positioning model deployed at an LMF, selection of a positioning model, switching of a positioning model, switching of an LMF, and data analytics of a positioning model. These technical solutions involve participation and/or interaction of core network devices. These solutions will be described in detail below through six embodiments.

### First Embodiment - Training of a Positioning Model Deployed on a User Equipment Side

According to a first embodiment of the present disclosure, a positioning model may be deployed on one side at a user equipment. The user equipment (e.g., a UE device) may communicate with an LMF via an AMF at a Non-Access Stratum (NAS), or may communicate with the LMF via a network device (e.g., a RAN device, which may include a gNB, etc.) and then via the AMF at an Access Stratum (AS). Therefore, as an example, core network devices primarily involved in the first embodiment include an AMF and an LMF.

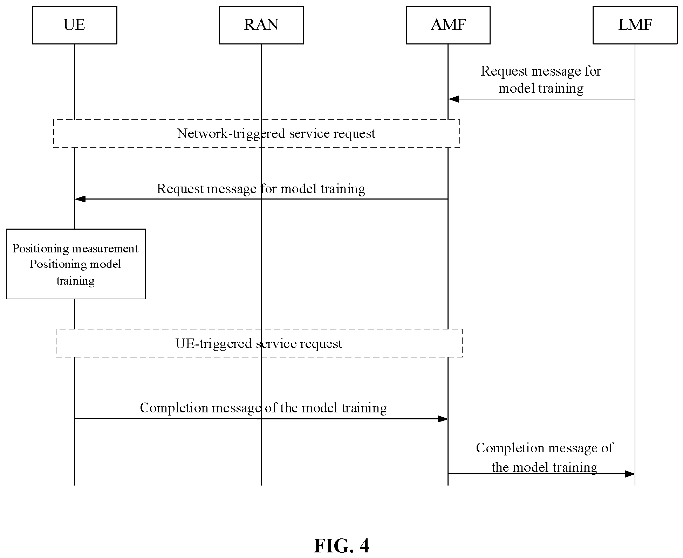

According to the first embodiment of the present disclosure, training may be performed for a positioning model deployed at a user equipment. By way of example and not limitation, the training process may be initiated when an LCS client indicates that there is a need for training of a positioning model. A signaling interaction flow of communication regarding the first embodiment of the present disclosure will be described below in conjunction with FIG. 4.

As shown in FIG. 4, a user equipment (shown as UE in the figure) in a wireless communication system may receive a request message for model training from an LMF via an AMF in a core network. Specifically, the LMF may first send a request message for model training to the AMF (by way of example and not limitation, the request message may be included in a Namf_Communication_N1N2MessageTransfer service operation invoked by the LMF toward the AMF). In a case where the UE is in an idle connection state (e.g., a CM-IDLE state), the AMF may initiate a network-triggered service request procedure so that the AMF can establish communication with the UE (e.g., establish directly or establish via a network device (shown as RAN in the figure)) so as to send the request message for model training to the UE (by way of example and not limitation, the request message may be included in a DL NAS TRANSPORT message sent by the AMF to the UE).

It should be understood that the above request message for model training may comprise at least auxiliary positioning data provided by the LMF to the UE. According to the first embodiment of the present disclosure, the auxiliary positioning data is related to the training of the positioning model on the UE side, and may comprise at least one or more of the following: a positioning application scenario, expected positioning accuracy, an inference duration, and training data reliability. Additionally or optionally, the auxiliary positioning data may also comprise coordinate system parameters, information indicating whether an auxiliary PRU is needed, and so on. It should also be understood that the above request message for model training may also optionally comprise a request for a user equipment capability (UE capability) of the UE. Additionally or optionally, the request message for the model may also comprise a request for the UE to confirm completion of training for the positioning model.

After the UE receives the request message for model training from the LMF, the UE may perform positioning measurements, and further perform positioning model training. For example, during a positioning measurement, the UE may obtain strength of a positioning reference signal measured by itself. Therefore, according to the first embodiment of the present disclosure, an input of the positioning model deployed at the UE may comprise at least the auxiliary positioning data and the strength of the positioning reference signal measured by the UE itself. An output of the positioning model may comprise at least a positioning result of the UE. It should be understood that the positioning result may be an inferred positioning result serving as intermediate data for a model training algorithm, or may be a direct positioning result of the user equipment, including, e.g., location or angle, etc. It should be understood that an artificial intelligence algorithm (e.g., including a machine learning algorithm, etc.) may be used to perform training for the positioning model. By way of example and not limitation, supervised learning may be performed on the positioning model so that it learns the relationship between input parameters and output parameters, thereby achieving estimation and prediction of a location. Generally, the algorithm may be repeatedly executed several times until the model converges, thereby completing the training.

After the UE performs training for the positioning model deployed at the UE, the UE may send a completion message of the model training to the LMF via the AMF in the core network. Specifically, in a case where a long model training time causes the UE to enter an idle connection state (e.g., a CM-IDLE state), the UE may initiate a UE-triggered service request procedure so that the UE can establish communication with the AMF (e.g., establish directly or establish via a RAN) so as to send a completion message of the model training to the AMF (by way of example and not limitation, the completion message may be included in a UL NAS TRANSPORT message sent by the UE to the AMF), and then to the LMF (by way of example and not limitation, the completion message may be included in a Namf_Communication_N1InfoNotify service operation invoked by the AMF toward the LMF). The completion message may indicate confirmation that the training regarding the positioning model has been completed by the UE.

It should be understood that in a case where the request message for model training comprises a request for a UE capability, the completion message of the model training may comprise the UE capability provided by the UE. By way of example and not limitation, in this embodiment, the UE capability may comprise one or more of an application scenario of a model that the user equipment can support, a size of the model, a type of the model, prediction latency of the model, and prediction accuracy of the model, etc.

Additionally or optionally, after performing training for the positioning model deployed at the UE, the UE may report the positioning result to the LMF via the AMF. For example, the positioning result may be included in the completion message of the model training, causing the LMF to detect and verify a result of the model training at the UE (not shown in the figure). Specifically, the LMF may generate an adjustment message for adjusting a parameter or structure of a positioning model on the UE side based at least on a comparison of the received positioning result (e.g., an inferred positioning result or a direct positioning result) and real positioning data possessed at the LMF. It should be understood that the analysis result of the above comparison may be obtained by the LMF with the assistance of an NWDAF. Thereafter, the UE may receive the adjustment message from the LMF via the AMF, and adjust the parameter and structure of the positioning model deployed at the UE based on the adjustment message. By way of example and not limitation, in a case where the positioning model adopts an artificial neural network algorithm for training, adjusting the parameter and structure of the model comprises adjusting the number of layers of the network and the weight of each layer, etc.

Optionally, the completion message of the model training may also comprise information associated with the positioning model deployed on the UE side, such as an identifier or a functionality identifier of the positioning model, etc.

It should be noted that the information interaction diagram in FIG. 4 merely provides an example and is not intended to be limiting. More or fewer steps may be included in the figure, and the steps may also be performed in different order than that of the steps depicted in the figure. For example, when the UE is in a normal connection state, the network-triggered service request procedure and the UE-triggered service request procedure in FIG. 4 may be omitted. Furthermore, if the request message for model training does not request the UE to confirm when the model training is completed and does not request the UE capability, the transmission of the completion information of the model training may be omitted.

In summary, according to the first embodiment of the present disclosure, training of a positioning model can be supported on a user equipment side, thereby achieving a positioning function of the user equipment. With the assistance of data provided by a core network device, efficiency and accuracy of positioning on the user equipment side can be improved.

### Second Embodiment - Training of a Positioning Model Deployed on a Core Network Side

According to a second embodiment of the present disclosure, a positioning model may be deployed on one side at a core network. By way of example and not limitation, the positioning model may be deployed at an LMF or an NWDAF in the core network.

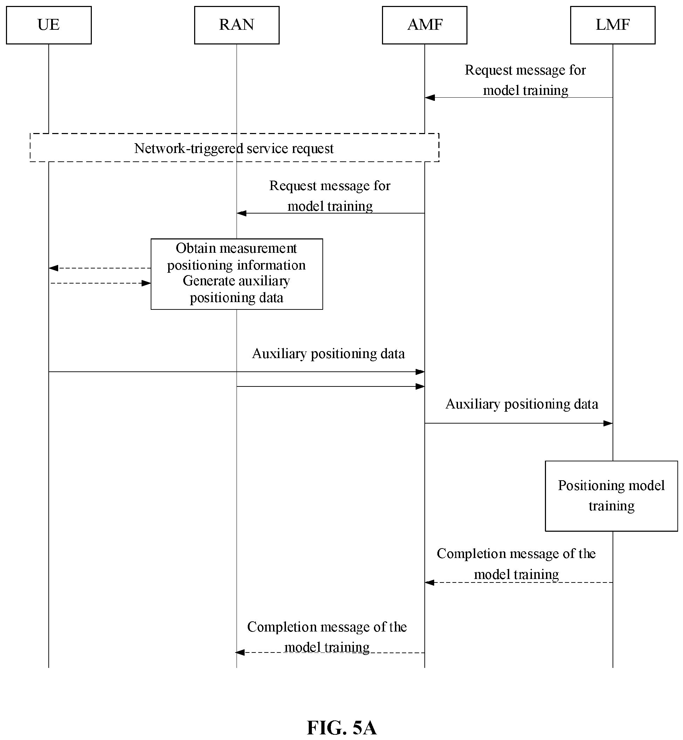

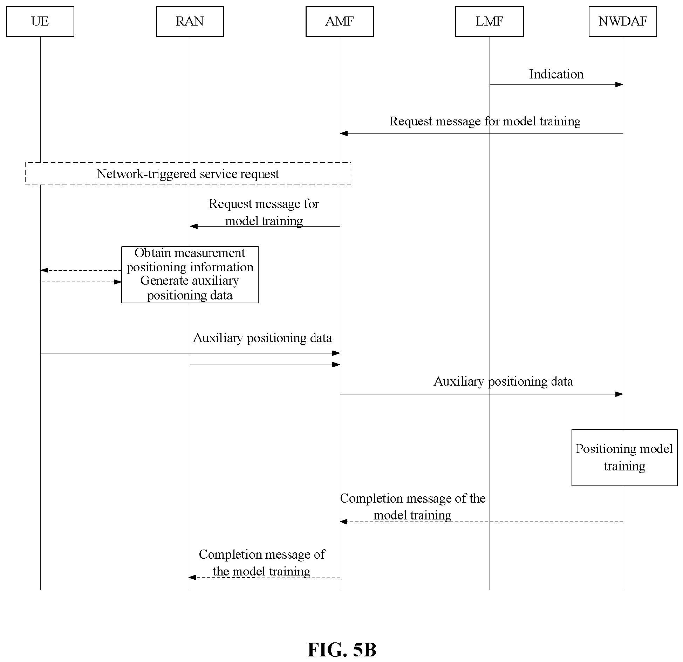

According to the second embodiment of the present disclosure, training may be performed for a positioning model deployed at a core network device (e.g., an LMF or an NWDAF). By way of example and not limitation, the training process may be initiated when an LCS client indicates that there is a need for training of a positioning model. Signaling interaction flows of communication regarding the second embodiment of the present disclosure will be described below in conjunction with FIGS. 5A and 5B, respectively.

FIG. 5A illustrates an interaction diagram of deploying a positioning model at an LMF in a core network and training the same. As shown in FIG. 5A, an LMF may send a request message for model training to a network device (shown as RAN in the figure) in a wireless communication system via an AMF. Specifically, the LMF may first send a request message for model training to the AMF (by way of example and not limitation, the request message may be included in a Namf_Communication_N1N2MessageTransfer service operation invoked by the LMF toward the AMF). In a case where a user equipment (shown as UE in the figure) for positioning by the LMF is in an idle connection state (e.g., a CM-IDLE state), the AMF may initiate a network-triggered service request procedure so that the AMF can establish communication with the UE (and in turn with the RAN) (it should be understood that separate communication between the AMF and the RAN may not require a network-triggered service request procedure).

As shown in FIG. 5A, the AMF may send the request message for model training to the RAN (by way of example and not limitation, the request message may be included in an N2 Transport message sent by the AMF to the RAN). According to the second embodiment of the present disclosure, the request message may comprise a request for auxiliary positioning data for positioning model training at the LMF.

It should be understood that, optionally, the above request message for model training may further comprise a request for a user equipment capability (UE capability) of the UE. The request message may optionally be further sent by the RAN to the UE (not shown in the figure).

Next, in response to receiving the request message for model training from the LMF, the RAN may cause the UE to measure strength of a positioning reference signal (PRS, which is a downlink reference signal), and the UE may directly send the strength of the positioning reference signal measured by itself as part of the auxiliary positioning data to the LMF via the AMF. In other words, in this case, the LMF may receive from the UE via the AMF the auxiliary positioning data comprising the strength of the positioning reference signal measured by the UE itself. Alternatively, in response to receiving the request message for model training from the LMF, the RAN may measure strength of a channel sounding reference signal (SRS, which is an uplink reference signal) from the UE, and the RAN may send the strength of the channel sounding reference signal measured by itself as part of the auxiliary positioning data to the LMF via the AMF. In other words, in this case, the LMF may receive from the RAN via the AMF the auxiliary positioning data comprising the strength of the channel sounding reference signal.

As it may be seen, the LMF may obtain auxiliary positioning data from the RAN or the UE (generally, either one may be selected to perform). Correspondingly, in the case of obtaining auxiliary positioning data from the RAN, the auxiliary positioning data may comprise strength of an SRS from the UE measured by the RAN; in the case of obtaining auxiliary positioning data from the UE, the auxiliary positioning data may comprise strength of a PRS measured by the UE itself.

It should be understood that the above auxiliary positioning data may also comprise at least one or more of the following: an identifier of a cell to which the UE is connected (based on which the location and coverage range of the cell may be known), a time delay of a positioning reference signal transmitted by the UE measured by the RAN, and phase information, an incident angle, a Doppler shift, and timestamp information of the positioning reference signal of the UE. Additionally or optionally, the auxiliary positioning data may also comprise coordinate system parameters, information indicating whether an auxiliary PRU is needed, and so on.

The LMF may receive the auxiliary positioning data from the RAN or the UE via the AMF, and in turn perform training for a positioning model deployed at the LMF (by way of example and not limitation, the auxiliary positioning data may be included in a Namf_Communication_N2InfoNotify service operation invoked by the AMF toward the LMF). Therefore, according to the second embodiment of the present disclosure, an input of the positioning model deployed at the LMF may comprise at least auxiliary positioning data (the auxiliary positioning data may comprise at least strength of a channel sounding reference signal from a UE measured by a RAN or strength of a positioning reference signal measured by a UE itself). An output of the positioning model may comprise at least a positioning result of the UE. The positioning result may be a final positioning result, including data such as location or angle. It should be understood that an artificial intelligence algorithm (e.g., including a machine learning algorithm, etc.) may be used to perform training for the positioning model. By way of example and not limitation, supervised learning may be performed on the positioning model so that it learns the relationship between input parameters and output parameters, thereby achieving estimation and prediction of a location. Generally, the algorithm may be repeatedly executed several times until the model converges, thereby completing the training.

It should be understood that in a case where the request message for model training comprises a request for the UE capability, (e.g., upon receiving auxiliary positioning data), the LMF may receive the UE capability provided by the UE from the RAN via the AMF, or the LMF may receive the UE capability from the UE via the AMF. By way of example and not limitation, in this embodiment, the user equipment capability may comprise one or more of the following: a positioning method, a positioning model, and accuracy of previous positioning. Additionally or optionally, the user equipment capability may also comprise one or more of the following: an application scenario of a model that the user equipment can support, a size of the model, a type of the model, prediction latency of the model, and prediction accuracy of the model, etc.

After performing training for the positioning model deployed at the LMF, the LMF may send a completion message of the model training to the RAN via the AMF in the core network. The completion message may indicate confirmation that the training regarding the positioning model has been completed by the LMF. By way of example and not limitation, the completion message may be included in a Namf_Communication_N1InfoNotify service operation invoked by the LMF toward the AMF. Further, by way of example and not limitation, the completion message may be included in an N2 Transport message sent by the AMF to the RAN.

It should be noted that the information interaction diagram in FIG. 5A merely provides an example and is not intended to be limiting. More or fewer steps may be included in the figure, and the steps may also be performed in different order than that of the steps depicted in the figure. For example, the network-triggered service request procedure in FIG. 5A may be optional, and the transmission of the completion information of the model training may also be optional.

FIG. 5B illustrates an interaction diagram of deploying a positioning model at an NWDAF in a core network and training the same. As shown in FIG. 5B, in response to an indication from an LMF in the core network (indicating that training of a positioning model is required), an NWDAF may send a request message for model training to a network device (shown as RAN in the figure) in a wireless communication system via an AMF. Specifically, the NWDAF may first send a request message for model training to the AMF. In a case where a user equipment (shown as UE in the figure) intended for positioning is in an idle connection state (e.g., a CM-IDLE state), the AMF may initiate a network-triggered service request procedure so that the AMF can establish communication with the UE (and in turn with the RAN).

As shown in FIG. 5B, the AMF may send the request message for model training to the RAN. According to the second embodiment of the present disclosure, the request message may comprise a request for auxiliary positioning data for positioning model training at the NWDAF.

It should be understood that, optionally, the request message for model training may further comprise a request for a user equipment capability (UE capability) of the UE. The request message may optionally be further sent by the RAN to the UE (not shown in the figure).

Next, in response to receiving the request message for model training from the NWDAF, the RAN may cause the UE to measure strength of a positioning reference signal (PRS, which is a downlink reference signal), and the UE may directly send the strength of the positioning reference signal measured by itself as part of the auxiliary positioning data to the NWDAF via the AMF. In other words, in this case, the NWDAF may receive from the UE via the AMF the auxiliary positioning data comprising the strength of the positioning reference signal measured by the UE itself. Alternatively, in response to receiving the request message for model training from the NWDAF, the RAN may measure strength of a channel sounding reference signal (SRS, which is an uplink reference signal) from the UE, and the RAN may send the strength of the channel sounding reference signal measured by itself as part of the auxiliary positioning data to the NWDAF via the AMF. In other words, in this case, the NWDAF may receive from the RAN via the AMF the auxiliary positioning data comprising the strength of the channel sounding reference signal.

As it may be seen, that the NWDAF may obtain auxiliary positioning data from the RAN or the UE (generally, either one may be selected to perform). Correspondingly, in the case of obtaining auxiliary positioning data from the RAN, the auxiliary positioning data may comprise strength of an SRS from the UE measured by the RAN; in the case of obtaining auxiliary positioning data from the UE, the auxiliary positioning data may comprise strength of a PRS measured by the UE itself.

It should be understood that the above auxiliary positioning data may also comprise at least one or more of the following: an identifier of a cell to which the UE is connected (based on which the location and coverage range of the cell may be known), a time delay of a positioning reference signal transmitted by the UE measured by the RAN, and phase information, an incident angle, a Doppler shift, and timestamp information of the positioning reference signal of the UE. Additionally or optionally, the auxiliary positioning data may also comprise coordinate system parameters, information indicating whether an auxiliary PRU is needed, and so on.

The NWDAF may receive the auxiliary positioning data from the RAN or the UE via the AMF, and in turn perform training for a positioning model deployed at the NWDAF. Additionally or optionally, the auxiliary positioning data may be further sent to the NWDAF after being processed and handled by the LMF. According to the second embodiment of the present disclosure, an input of the positioning model deployed at the NWDAF may comprise at least auxiliary positioning data (the auxiliary positioning data may comprise at least strength of a channel sounding reference signal from a UE measured by a RAN or strength of a positioning reference signal measured by a UE itself). An output of the positioning model may comprise at least a positioning result of the UE. The positioning result may be a final positioning result, including data such as location or angle. It should be understood that an artificial intelligence algorithm (e.g., including a machine learning algorithm, etc.) may be used to perform training for the positioning model.

It should be understood that in a case where the request message for model training comprises a request for the UE capability, (e.g., upon receiving auxiliary positioning data), the NWDAF may receive the UE capability provided by the UE from the RAN via the AMF, or the NWDAF may receive the UE capability from the UE via the AMF. By way of example and not limitation, in this embodiment, the user equipment capability may comprise one or more of the following: a positioning method, a positioning model, and accuracy of previous positioning. Additionally or optionally, the user equipment capability may also comprise one or more of the following: an application scenario of a model that the UE can support, a size of the model, a type of the model, prediction latency of the model, and prediction accuracy of the model, etc.

After performing training for the positioning model deployed at the NWDAF, the NWDAF may send a completion message of the model training to the RAN via the AMF in the core network. The completion message may indicate confirmation that the training regarding the positioning model has been completed by the NWDAF.

It should be noted that the information interaction diagram in FIG. 5B merely provides an example and is not intended to be limiting. More or fewer steps may be included in the figure, and the steps may also be performed in different order than that of the steps depicted in the figure. For example, the network-triggered service request procedure in FIG. 5B may be optional, and the transmission of the completion information of the model training may also be optional.

It should be recognized that more details regarding communication flows, communication messages, and model training, etc., in FIG. 5B may be referred to the detailed description in FIG. 5A, which will not be repeated here.

In summary, according to the second embodiment of the present disclosure, training of a positioning model can be supported on a core network side, thereby achieving a positioning function of a user equipment. With the assistance of data provided by a user equipment and a network device, efficiency and accuracy of core network positioning of a user equipment can be improved.

According to the present disclosure, a core network device or a network device may manage a positioning model deployed on a user equipment side, but the reverse is not supported. This is because a positioning model on a core network side does not only serve a single target user equipment; other user equipments resided in a cell where the user equipment is located or user equipments that may enter the cell may require the positioning model on the core network side for location services. Therefore, a third embodiment and a fourth embodiment below will respectively describe model selection and model switching for a positioning model deployed on a user equipment side.

### Third Embodiment - Model Selection of a Positioning Model

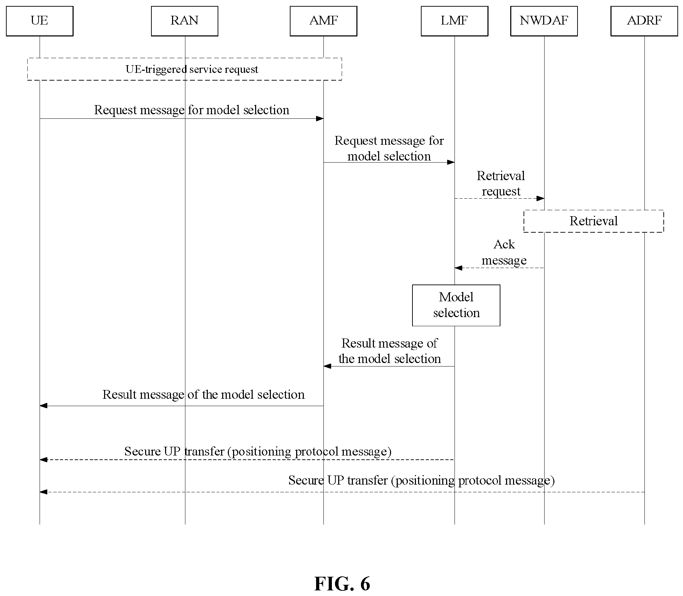

A third embodiment of the present disclosure mainly involves a positioning model deployed on one side at a user equipment. The user equipment (e.g., a UE device) may communicate with an LMF via an AMF at a Non-Access Stratum (NAS), or may communicate with the LMF via a network device (e.g., a RAN device, which may include a gNB, etc.) and then via the AMF at an Access Stratum (AS). Generally, in an initial stage, a user equipment expects to obtain some positioning models suited to itself to facilitate subsequent positioning measurements and training of the positioning models. According to the third embodiment of the present disclosure, an LMF may participate in selecting a suitable positioning model for a user equipment. A signaling interaction flow of communication regarding the third embodiment of the present disclosure will be described below in conjunction with FIG. 6.

As shown in FIG. 6, a user equipment (shown as UE in the figure) in a wireless communication system may send a request message for model selection of a positioning model deployed at the UE to an LMF via an AMF in a core network. Specifically, in a case where the UE is in an idle connection state (e.g., a CM-IDLE state), the UE may initiate a UE-triggered service request procedure so that the UE can establish communication with the AMF (e.g., establish directly or establish via a network device (shown as RAN in the figure)) so as to send a request message for model selection to the AMF (by way of example and not limitation, the request message may be included in a UL NAS TRANSPORT message sent by the UE to the AMF). Further, the AMF may send the request message for model selection to the LMF (by way of example and not limitation, the request message may be included in a Namf_Communication_N1N2MessageTransfer service operation invoked by the AMF toward the LMF).

It should be understood that the above request message for model selection may comprise at least a user equipment capability (UE capability) of the UE. According to the third embodiment of the present disclosure, the user equipment capability may comprise one or more of the following: an application scenario of a model that the user equipment can support, a size of the model, a type of the model, prediction latency of the model, and prediction accuracy of the model, etc. Additionally or optionally, the request message for model selection may also comprise one or more of the following: a number of trained models, and expected positioning accuracy, etc.

After receiving the request message for model selection from the UE, the LMF may select one or more positioning models from a plurality of positioning models for deployment at the requesting UE based at least on the request message. It should be understood that the LMF may select one or more positioning models suitable for deployment at the UE based on the UE capability in the request message (and optionally, the number of trained models, the expected positioning accuracy, etc.). In other words, the LMF may match model requirements on the UE side with functionalities of a plurality of selectable positioning models, thereby selecting positioning model(s) with a high matching degree with the UE (e.g., the matching degree higher than a certain threshold) for use by the UE.

It should be understood that, as one example, the above plurality of selectable positioning models may be stored at the LMF. As another example, the plurality of positioning models may be stored at an Analytics Data Repository Function (ADRF) in the core network, and the ADRF may be managed by an NWDAF. Each model may have a corresponding model identifier (ID) or functionality identifier (ID), so that the UE (and the LMF) may obtain a corresponding model according to the model ID/function ID.

Additionally or optionally, in a scenario where a plurality of positioning models are stored at an ADRF, as shown in FIG. 6, before the LMF performing model selection, the LMF may perform simple interaction with the ADRF via an NWDAF. Specifically, the LMF may send a retrieval request for a plurality of positioning models stored at the ADRF to the NWDAF. The NWDAF may perform a retrieval process to determine whether the plurality of positioning models are stored at the ADRF. In a case where it is determined that the plurality of positioning models are indeed stored at the ADRF, the NWDAF may send an acknowledgment message for the retrieval request to the LMF. After confirming that the plurality of positioning models known to the LMF itself are indeed stored at the ADRF, the LMF may implement the aforementioned model selection operations.

After performing selection for the positioning model deployed at the UE, the LMF may send a result message of the model selection to the UE via an AMF in the core network. Specifically, the LMF may send the result message of the model selection to the AMF (by way of example and not limitation, the result message may be included in a Namf_Communication_N1N2MessageTransfer service operation invoked by the LMF toward the AMF), and then to the UE (by way of example and not limitation, the result message may be included in a DL NAS TRANSPORT message sent by the AMF to the UE). The result message may comprise an identifier or a functionality identifier of the one or more positioning models selected by the LMF.

Alternatively, in a case where the plurality of positioning models are stored at the LMF, the UE may download the one or more positioning models selected by the LMF from the LMF by way of establishing a connection based on a positioning protocol message (e.g., an LPP message) (this manner belongs to a User Plane (UP) secure transfer manner); in a case where the plurality of positioning models are stored at the ADRF, the UE may download the selected one or more positioning models from the ADRF indicated by the LMF by way of establishing a connection based on a positioning protocol message (e.g., an LPP message) (this manner belongs to a User Plane (UP) secure transfer manner).

It should be noted that the information interaction diagram in FIG. 6 merely provides an example and is not intended to be limiting. More or fewer steps may be included in the figure, and the steps may also be performed in different order than that of the steps depicted in the figure. For example, the UE receiving from the LMF an identifier or a functionality identifier of the selected one or more positioning models and downloading the selected one or more positioning models from the LMF/ADRF may either be selected to perform.

In summary, according to the third embodiment of the present disclosure, hardware requirements at a user equipment can be reduced, e.g., there is no requirement to store a plurality of positioning models at the user equipment. Having an LMF select a positioning model based on factors such as UE capability may increase selection speed and adaptability of a positioning model.

### Fourth Embodiment - Model Switching of a Positioning Model

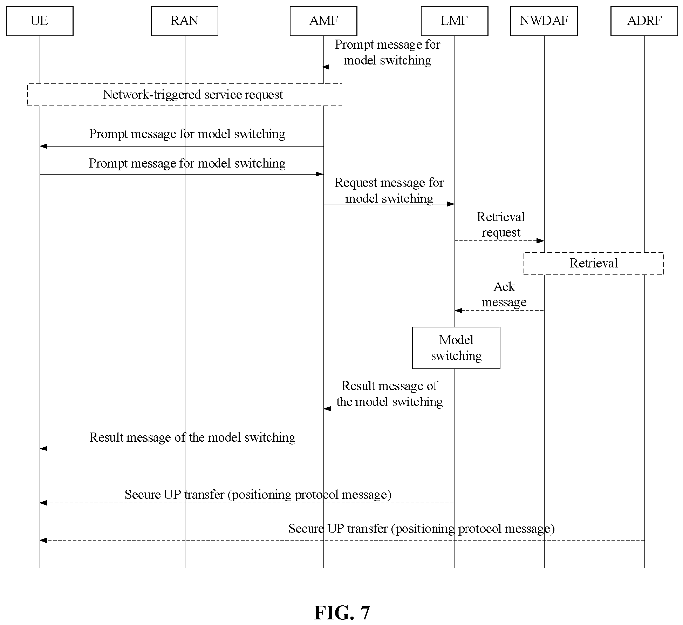

A fourth embodiment of the present disclosure mainly involves a positioning model deployed on one side at a user equipment. Generally, if the degree of matching between one or more positioning models currently used by the user equipment (for example, a UE device) and the user equipment decreases and the positioning effect becomes worse, it may be considered to switch the current positioning model to a more suitable updated positioning model. According to the fourth embodiment of the present disclosure, an LMF may participate in switching to a suitable positioning model for the user equipment. A signaling interaction flow of communication regarding the fourth embodiment of the present disclosure will be described below in conjunction with FIG. 7.

As shown in FIG. 7, a user equipment (shown as UE in the figure) in a wireless communication system may receive a prompt message for model switching from an LMF via an AMF in a core network. Specifically, the LMF may first send the prompt message to the AMF (by way of example and not limitation, the request message may be included in a Namf_Communication_N1N2MessageTransfer service operation invoked by the LMF toward the AMF). In a case where the UE is in an idle connection state (e.g., a CM-IDLE state), the AMF may initiate a network-triggered service request procedure so that the AMF can establish communication with the UE (e.g., establish directly or establish via a network device (shown as RAN in the figure)) so as to send the prompt message for model switching to the UE (by way of example and not limitation, the prompt message may be included in a DL NAS TRANSPORT message sent by the AMF to the UE).

It should be understood that the prompt message for model switching received by the UE may indicate to the UE that the positioning effect of its current positioning model is poor, and switching the current positioning model needs to be considered. By way of example and not limitation, when an LCS client is unsatisfied with location information reported by the UE (e.g., accuracy of the location information is lower than a certain threshold) or has additional requirement, the LMF may send the above prompt message to the UE, thereby triggering the UE to send the request message for model switching.

In this embodiment, the UE may send a request message for model switching of a positioning model deployed at the UE to the LMF via the AMF. Specifically, the UE may send the request message for model switching to the AMF (by way of example and not limitation, the request message may be included in a UL NAS TRANSPORT message sent by the UE to the AMF). Further, the AMF may send the request message for model switching to the LMF (by way of example and not limitation, the request message may be included in a Namf_Communication_N1N2MessageTransfer service operation invoked by the AMF toward the LMF).

It should be understood that the above prompt message for model switching may comprise a request for a user equipment capability (UE capability) of the UE. Correspondingly, a request message for model switching sent by the UE may comprise at least a UE capability of the UE. According to the fourth embodiment of the present disclosure, the user equipment capability may comprise one or more of the following: an application scenario of a model that the user equipment can support, a size of the model, a type of the model, prediction latency of the model, and prediction accuracy of the model. Additionally or optionally, the request message for model switching may also comprise one or more of the following: a model previously used by the user equipment, a number of trained models, and expected positioning accuracy. It should be understood that compared to parameters in a request message for model selection in the third embodiment, since requirements of the UE may have changed, parameters in a request message for model switching in the fourth embodiment may also have changed accordingly.

After receiving the request message for model switching from the UE, the LMF may select one or more updated positioning models from a plurality of positioning models for deployment at the requesting UE based at least on the request message. It should be understood that the LMF may select one or more updated positioning models suitable for deployment at the UE based on the UE capability in the request message (and optionally, a model previously used by the user equipment, a number of trained models, expected positioning accuracy, etc.). In other words, the LMF may match current model requirements on the UE side with functionalities of a plurality of selectable positioning models, thereby selecting updated positioning model(s) with a high matching degree (e.g., a matching degree higher than a certain threshold) with the current UE for use by the UE.

It should be understood that, as one example, the above plurality of selectable positioning models may be stored at the LMF. As another example, the plurality of positioning models may be stored at an Analytics Data Repository Function (ADRF) in the core network, and the ADRF may be managed by an NWDAF. Each model may have a corresponding model identifier (ID) or functionality identifier (ID), so that the UE (and the LMF) may obtain a corresponding model according to the model ID/function ID.

Additionally or optionally, in a scenario where a plurality of positioning models are stored at an ADRF, as shown in FIG. 7, before the LMF performing model switching, the LMF may perform simple interaction with the ADRF via an NWDAF. Specifically, the LMF may send a retrieval request for a plurality of positioning models stored at the ADRF to the NWDAF. The NWDAF may perform a retrieval process to determine whether the plurality of positioning models are stored at the ADRF. In a case where it is determined that the plurality of positioning models are indeed stored at the ADRF, the NWDAF may send an acknowledgment message for the retrieval request to the LMF. After confirming that the plurality of positioning models known to the LMF itself are indeed stored at the ADRF, the LMF may implement the aforementioned model switching operation.

After switching the positioning model deployed at the UE (i.e., has selected an updated positioning model), the LMF may send a result message of the model switching to the UE via an AMF in the core network. Specifically, the LMF may send the result message of the model switching to the AMF (by way of example and not limitation, the result message may be included in a Namf_Communication_N1N2MessageTransfer service operation invoked by the LMF toward the AMF), and then to the UE (by way of example and not limitation, the result message may be included in a DL NAS TRANSPORT message sent by the AMF to the UE). The result message may comprise an identifier or an updated functionality identifier of the one or more updated positioning models selected by the LMF.

Alternatively, in a case where the plurality of positioning models are stored at the LMF, the UE may download the one or more updated positioning models selected by the LMF from the LMF by way of establishing a connection based on a positioning protocol message (e.g., an LPP message) (this manner belongs to a User Plane (UP) secure transfer manner); in a case where the plurality of positioning models are stored at the ADRF, the UE may download the selected one or more updated positioning models from the ADRF indicated by the LMF by way of establishing a connection based on a positioning protocol message (e.g., an LPP message) (this manner belongs to a User Plane (UP) secure transfer manner).

It should be noted that the information interaction diagram in FIG. 7 merely provides an example and is not intended to be limiting. More or fewer steps may be included in the figure, and the steps may also be performed in different order than that of the steps depicted in the figure. For example, the UE receiving from the LMF an identifier or an updated functionality identifier of the selected one or more updated positioning models and downloading the selected one or more updated positioning models from the LMF/ADRF may either be selected to perform.

It should be recognized that more details regarding system network structures and communication flows in FIG. 7 may be referred to the detailed description in FIG. 6, which will not be repeated here.

In summary, according to the fourth embodiment of the present disclosure, a decline in positioning function of a user equipment may be detected in a timely manner, and with the assistance of an LMF, switching to an updated positioning model may be rapidly performed, thereby further improving effectiveness and adaptability of a positioning model.

As described above, the first through fourth embodiments of the present disclosure involve interactions between user equipments and/or network devices and core network devices. It should be understood that interactions among devices of the core network itself may also achieve improvements in positioning functions. The following fifth and sixth embodiments will respectively describe location services capable of being implemented mainly through network elements in the core network.

### Fifth Embodiment - LMF Switching

Because a user equipment usually has mobility, a current LMF serving the user equipment may find that it may no longer support a location service for the user equipment. By way of example and not limitation, when a current LMF (hereinafter simply referred to as a first LMF) learns that an LCS client is unsatisfied with location information reported by a user equipment (e.g., accuracy of the location information is lower than a certain threshold) or has additional requirement, an LMF switching process (also referred to herein as an LMF reselection process) may be initiated, thereby switching to another LMF more suitable for the current user equipment (hereinafter simply referred to as a second LMF), so as to better support and manage positioning functions of the user equipment. It should be understood that core network devices such as an AMF and a GMLC may participate in or support the above LMF switching process.

Specifically, a core network device may determine, based on LMF profile information, to switch from a first LMF in a core network to a second LMF for positioning of a user equipment in a wireless communication system. According to the fifth embodiment of the present disclosure, LMF profile information may comprise identifiers of a plurality of LMFs and identifiers (IDs) or functionality identifiers (IDs) of their supported positioning models. It should be understood that the LMF profile information comprises at least an identifier of a first LMF and an identifier or a functionality identifier of a positioning model that it supports, and an identifier of a second LMF and an identifier or a functionality identifier of a positioning model that it supports. Additionally or optionally, the LMF profile information may also comprise indication information related to LMF positioning management provided by an NWDAF.

According to the fifth embodiment of the present disclosure, for each LMF, profile information regarding the LMF may be added in content of an LCS model. Specific examples are shown below, where added content is indicated by bolding and underlining:
- LCS client type.
- Requested Quality of Service information, for example:
   - LCS accuracy,
- Response time (latency),
- Access type (3GPP /N3GPP).
NOTE 1: Location methods may differ depending on the Access Type, e.g. in the case of WLAN Access Location determination may just correspond to retrieval of IP addressing information from the N3IWF/TNGF; As another example, for Wireline access, Location determination may just correspond to retrieval of geo coordinates corresponding to a GLI as defined in clause 4.7.8 of TS 23.316 [21] or a HFC Node ID.
- RAT type (e.g. 5G NR, eLTE, or any of the RAT Types specified for NR satellite access) and/or the serving AN node (i.e. gNB or NG-eNB) of the target UE.
- RAN configuration information.
- LMF capabilities, including the support of Uu based positioning as defined in clause 4.3.8 and/or Ranging/Sidelink positioning as defined in clause 4.3.8 of TS 23.586 [40].
- LMF load.
- LMF location.
- **positioning models supported by LMF**
   - **LCS model ID/functionality ID**
- Indication of either a single event report or multiple event reports.
- Duration of event reporting.
- Network slicing information, e.g. S-NSSAI and/or NSI ID.
- LMF Service Area consisting of one or more TA(s).
- Supported GAD shapes.
- Support LCS when an MBSR is involved.
- Requested UE has maintained user plane connection with certain LMFs.

When receiving a NAS message from UE, including an LMF ID together with a LPP message (refer to step 25 in clause 6.3.1 for event reporting for a deferred 5GC-MT-LR), AMF sends the LPP message to the LMF, as indicated by the LMF ID.

Note 2: Description on how UE encapsulates the LMF ID in the NAS message is documented in TS 24.571 [36].

UDM may store the LMF ID in UE subscription data. During the location procedure, GMLC received the LMF ID from the UDM and provides it to AMF.

A GMLC may be configured with the following parameters:
- LMF ID and/or
- per group ID and its correlating LMF ID.

It should be understood that the above LMF profile information may be configured to be stored at an AMF, an LMF, or a GMLC. Correspondingly, the above LMF switching/reselection process may be independently implemented at an AMF, a first LMF, or a GMLC. Additionally or alternatively, the above LMF switching/reselection process may also be jointly performed by a combination of a plurality of devices. By way of example and not limitation, an LMF switching/reselection process may be triggered by an AMF. When LMF profile information is located at an AMF, the AMF side may directly complete an LMF switching process; when LMF profile information is located at a first LMF, an AMF may instruct the LMF to perform an LMF switching process (this process may optionally be based on additional information provided by a GMLC to the LMF); when LMF profile information is located at a GMLC, an AMF may instruct the GMLC to perform an LMF switching process, and the GMLC may provide an ID of a selected second LMF to the AMF.

In summary, according to the fifth embodiment of the present disclosure, by adding LMF profile information related to positioning models in an LCS model, an LMF suitable for a current user equipment can be rapidly switched to when the user equipment is moving, so as to provide better location services.

### Sixth Embodiment - NWDAF Analytics

An NWDAF in a core network comprises functions for analyzing positioning data. For example, a core network device such as an AMF, a GMLC, or Operation, Administration and Maintenance (OAM) may input positioning related data to an NWDAF, and after analysis, the NWDAF may output positioning accuracy statistics and prediction results.

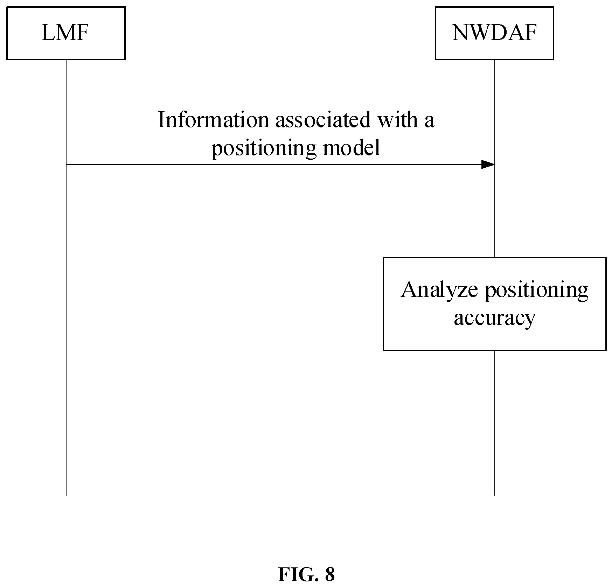

As described above, according to the first and second embodiments of the present disclosure, for example, a positioning model may be deployed at a user equipment or an LMF, and an artificial intelligence algorithm may be used to train it. Therefore, according to the sixth embodiment of the present disclosure, an LMF may obtain information associated with a used positioning model and may send the information to an NWDAF as an input parameter for a positioning analytics module of the NWDAF, causing the NWDAF to analyze the information. A signaling interaction flow of communication regarding the sixth embodiment of the present disclosure will be described below in conjunction with FIG. 8.

As shown in FIG. 8, an LMF in a core network may send information associated with a positioning model to an NWDAF in the core network, causing the NWDAF to analyze the information to obtain positioning accuracy of the positioning model regarding a user equipment in a wireless communication system. For example, information associated with a positioning model may comprise at least an identifier or a functionality identifier of the positioning model.

Table 1 below shows data collected by an NWDAF for positioning accuracy analysis. As shown in Table 1, the sixth embodiment of the present disclosure proposes utilizing an NWDAF to additionally analyze positioning model related information provided by an LMF (shown in bold and underlined font in Table 1), thereby further outputting more precise positioning statistics and prediction results.

**Table 1 Data Collected by NWDAF for Location Accuracy Analytics**

| Information | Source | Description |
|---|---|---|
| UE ID | AMF, OAM | (List of) SUPI (s) |
| Finer granularity UE location | GMLC | UE location information |
| ➢ UE Location | | Geographical location or location in local coordinate (as defined in TS 23.032 [34]) |
| ➢ Positioning methods | | The positioning methods used by the LMF when the location measurement was |
| | | made |
| ➢ LCS QoS | | LCS QoS accuracy as defined in clause 4.1b in TS 23.273 [39] |
| ➢ Indoor/outdoor indication | | Indication of indoor/outdoor when LMF can distinguish indoor/outdoor environment |
| ➢ NLOS/LOS indication | | Indication whether the UE measurements were based on LOS/NLOS measurements |
| Positioning Assistance Data | OAM | Selected positioning method corresponding assistance data as defined in TS 38.455 [44] |
| ➢ **AI model associated with positioning method** | **LMF** | In case UE-based and UE-assisted/LMF-based methods, AI models adopted for positioning |

In summary, according to the sixth embodiment of the present disclosure, by providing information associated with a positioning model to an NWDAF, the NWDAF can be caused to output more precise positioning statistics and prediction results.

It should be noted that the six embodiments (first embodiment through sixth embodiment) proposed in the present disclosure may be performed independently or performed in combination.

By way of example and not limitation, the first, third, and fourth embodiments of the present disclosure may be performed in combinations in various orders. In some examples, model selection may be performed according to the third embodiment, and then a positioning model deployed at a user equipment may be trained according to the first embodiment; in other embodiments, model selection may be performed according to the third embodiment, and then model switching may be performed according to the fourth embodiment in a case where the model is inapplicable; in yet other embodiments, model switching may be performed according to the fourth embodiment, and then a positioning model deployed at a user equipment may be trained according to the first embodiment; in still other embodiments, model selection may be performed according to the third embodiment, a positioning model may be trained according to the first embodiment, and model switching may be performed according to the fourth embodiment.

By way of example and not limitation, the second, fifth, and sixth embodiments of the present disclosure may be performed in combinations in various orders in a case where an executing body is an LMF. In some examples, a positioning model deployed at an LMF may be trained according to the second embodiment, and information associated with the positioning model may be sent to an NWDAF for analysis according to the sixth embodiment (the execution order of the two may be interchanged); in other embodiments, a positioning model deployed at a switched LMF may be trained according to the second embodiment, and (e.g., in a case where a current LMF is inapplicable to a user equipment) LMF switching may be performed according to the fifth embodiment; in yet other embodiments, positioning accuracy of a switched LMF may be analyzed according to the sixth embodiment, and (e.g., in a case of poor positioning effect) an LMF switching process may be performed according to the fifth embodiment. In addition, the second and sixth embodiments of the present disclosure may also be performed in combinations in various orders in a case where an executing body is an NWDAF.

It should be understood that, unless otherwise explicitly stated or clearly contradictory to the context, combined execution of the above embodiments is not limited in execution order.

Overall, a plurality of technical solutions applying artificial intelligence (/machine learning) technologies to positioning functions of user equipments in wireless communication systems proposed according to the present disclosure improve a plurality of aspects of location services. For example, the present disclosure supports deployment of a positioning model on one side at a user equipment side or a core network side, and supports training of a positioning model using artificial intelligence methods, and thus can improve efficiency and accuracy of positioning on a user equipment side or a core network side. A training method of a positioning model according to embodiments of the present disclosure may fully utilize measurement data of a user equipment in states of different locations and different speeds, bringing prediction advantages of artificial intelligence algorithms into play. Further, the present disclosure supports an LMF in a core network to execute model selection and model switching of a positioning model on a user equipment side, which may reduce hardware requirements of a user equipment, so as to utilize a core network element with a stronger storage capacity and computing capability to achieve storage of multiple models as well as calculation processes involved in model selection or switching, further improving efficiency. Additionally, the present disclosure leverages assistance of core network elements (e.g., performing analytics on positioning model data, switching an LMF and switching a positioning model in a timely manner, etc.), which may enable positioning requirements of an LCS client for a user equipment to be better met in various environments.

### Exemplary Methods

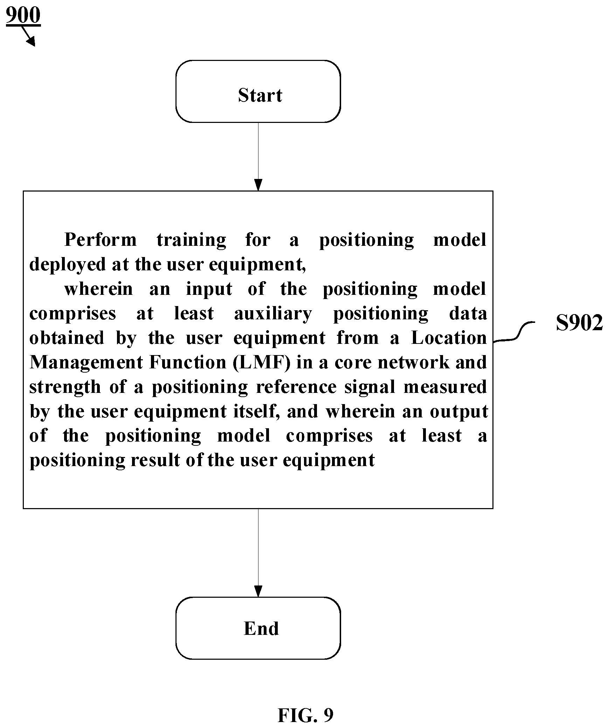

FIG. 9 illustrates a flowchart of an example method 900 for a user equipment (or more specifically, electronic device 200) in a wireless communication system according to a first embodiment of the present disclosure. As shown in FIG. 9, the method 900 may comprise performing training for a positioning model deployed at a user equipment (block S902). In the method 900, an input of the positioning model may comprise at least auxiliary positioning data obtained by the user equipment from a Location Management Function (LMF) in a core network and strength of a positioning reference signal measured by the user equipment itself. An output of the positioning model may comprise at least a positioning result of the user equipment. Detailed example operations of this method may be referred to the operation descriptions regarding a user equipment (or more specifically, electronic device 200) above, which will not be repeated here.

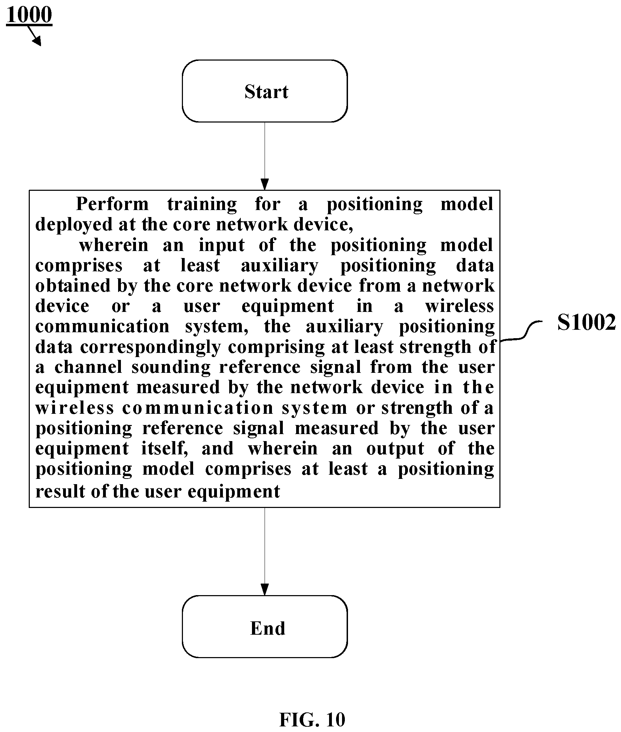

FIG. 10 illustrates a flowchart of an example method 1000 for a core network device (or more specifically, electronic device 300) in a wireless communication system according to a second embodiment of the present disclosure. The core network device in this embodiment may be a Location Management Function (LMF) or a Network Data Analytics Function (NWDAF). As shown in FIG. 10, the method 1000 may comprise performing training for a positioning model deployed at a core network device (block S1002). In the method 1000, an input of the positioning model may comprise at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself. An output of the positioning model may comprise at least a positioning result of the user equipment. Detailed example operations of this method may be referred to the operation descriptions regarding a core network device (or more specifically, electronic device 300) above, which will not be repeated here.

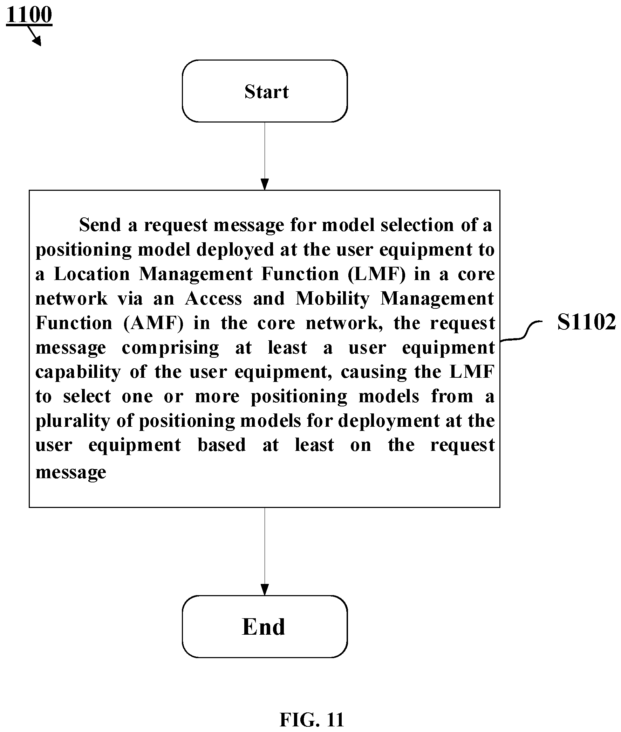

FIG. 11 illustrates a flowchart of an example method 1100 for a user equipment (or more specifically, electronic device 200) in a wireless communication system according to a third embodiment of the present disclosure. As shown in FIG. 11, the method 1100 may comprise sending a request message for model selection of a positioning model deployed at a user equipment to a Location Management Function (LMF) in a core network via an Access and Mobility Management Function (AMF) in the core network (block S1102). In the method 1100, the request message may comprise at least a user equipment capability of the user equipment, causing the LMF to select one or more positioning models from a plurality of positioning models for deployment at the user equipment based at least on the request message. Detailed example operations of this method may be referred to the operation descriptions regarding a user equipment (or more specifically, electronic device 200) above, which will not be repeated here.

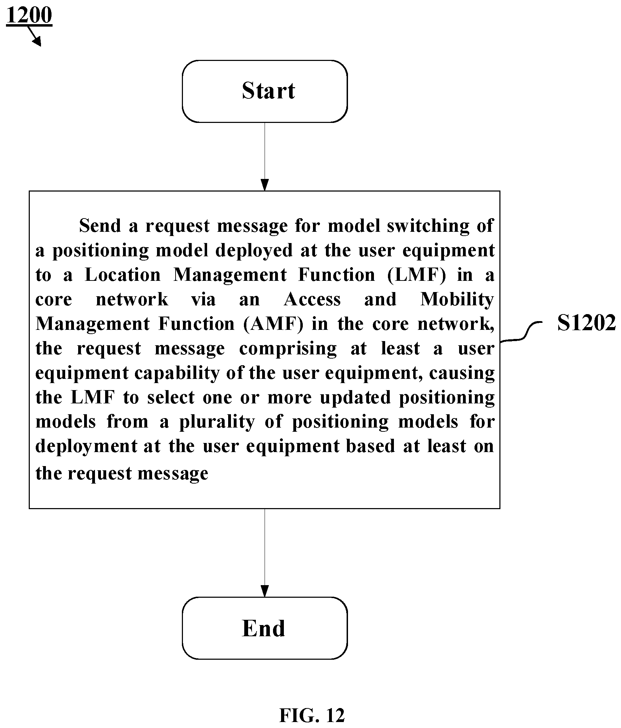

FIG. 12 illustrates a flowchart of an example method 1200 for a user equipment (or more specifically, electronic device 200) in a wireless communication system according to a fourth embodiment of the present disclosure. As shown in FIG. 12, the method 1200 may comprise sending a request message for model switching of a positioning model deployed at a user equipment to a Location Management Function (LMF) in a core network via an Access and Mobility Management Function (AMF) in the core network (block S1202). In the method 1200, the request message may comprise at least a user equipment capability of the user equipment, causing the LMF to select one or more updated positioning models from a plurality of positioning models for deployment at the user equipment based at least on the request message. Detailed example operations of this method may be referred to the operation descriptions regarding a user equipment (or more specifically, electronic device 200) above, which will not be repeated here.

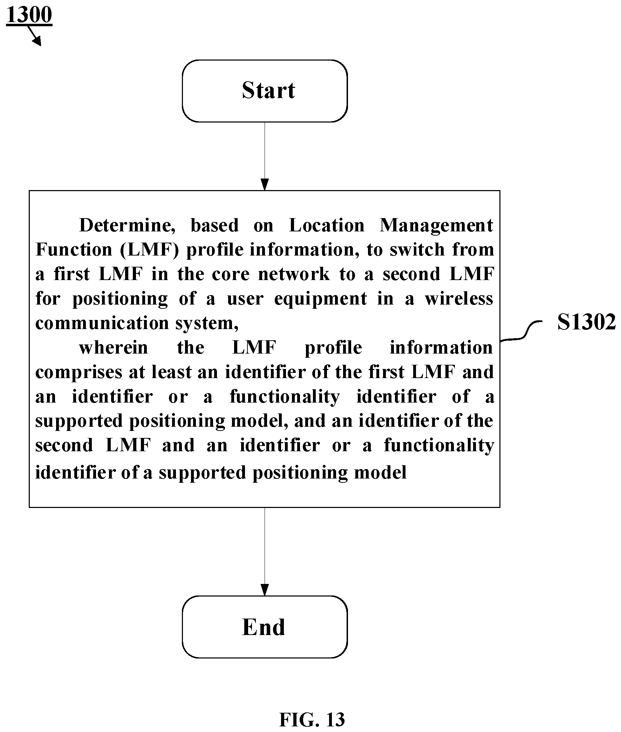

FIG. 13 illustrates a flowchart of an example method 1300 for a core network device (or more specifically, electronic device 300) in a wireless communication system according to a fifth embodiment of the present disclosure. The core network device in this embodiment may be a Location Management Function (LMF), an Access and Mobility Management Function (AMF), or a Gateway Mobile Location Centre (GMLC). As shown in FIG. 13, the method 1300 may comprise determining, based on LMF profile information, to switch from a first LMF in a core network to a second LMF for positioning of a user equipment in a wireless communication system (block S1302). In the method 1300, the LMF profile information may comprise at least an identifier of the first LMF and an identifier or a functionality identifier of a supported positioning model, and an identifier of the second LMF and an identifier or a functionality identifier of a supported positioning model. Detailed example operations of this method may be referred to the operation descriptions regarding a core network device (or more specifically, electronic device 300) above, which will not be repeated here.

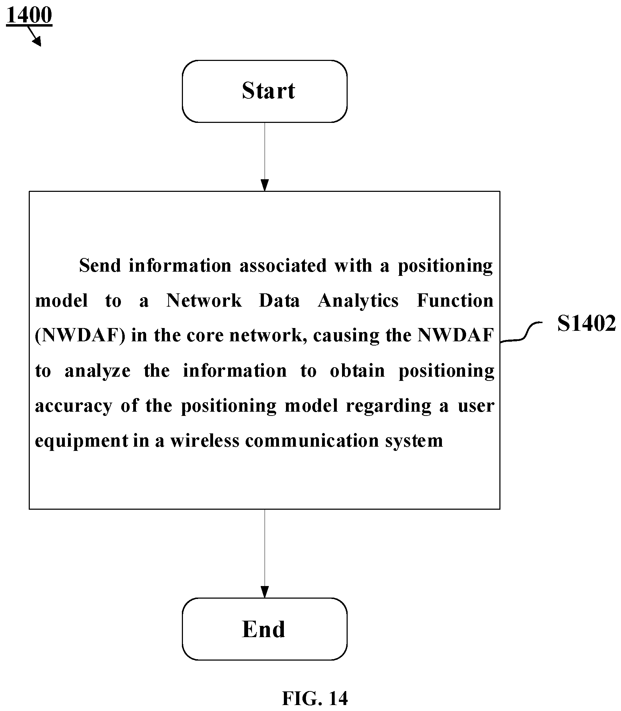

FIG. 14 illustrates a flowchart of an example method 1400 for a core network device (or more specifically, electronic device 300) in a wireless communication system according to a sixth embodiment of the present disclosure. The core network device in this embodiment may be a Location Management Function (LMF). As shown in FIG. 14, the method 1400 may comprise sending information associated with a positioning model to a Network Data Analytics Function (NWDAF) in a core network, causing the NWDAF to analyze the information to obtain positioning accuracy of the positioning model regarding a user equipment in a wireless communication system (block S1402). Detailed example operations of this method may be referred to the operation descriptions regarding a core network device (or more specifically, electronic device 300) above, which will not be repeated here.

As described above, the exemplary methods according to the six embodiments of the present disclosure may be performed independently or performed in combinations in various orders.

The solution of the present disclosure may be implemented in the following example manner.
(1) An electronic device for a user equipment in a wireless communication system, the electronic device comprising at least one processor and at least one memory including computer program instructions, wherein the at least one memory and the computer program instructions are configured to, via the at least one processor, cause the user equipment to:
   perform training for a positioning model deployed at the user equipment,
   wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.
(2) The electronic device of clause (1), wherein the positioning result comprises one of an inferred positioning result and a direct positioning result.
(3) The electronic device of clause (1), wherein the auxiliary positioning data comprises at least one or more of a positioning application scenario, expected positioning accuracy, an inference duration, and training data reliability.
(4) The electronic device of clause (2), wherein the at least one memory and the computer program instructions are further configured to, via the at least one processor, cause the user equipment to:
   receive a request message for model training from the LMF via an Access and Mobility Management Function (AMF) in the core network prior to performing training for the positioning model, the request message comprising at least the auxiliary positioning data; and
   after performing training for the positioning model, send a completion message of the model training to the LMF via the AMF, the completion message indicating confirmation that the training regarding the positioning model has been completed by the user equipment.
(5) The electronic device of clause (4), wherein the request message further comprises a request for a user equipment capability of the user equipment, and wherein the completion message further comprises the user equipment capability.
(6) The electronic device of clause (5), wherein the user equipment capability comprises one or more of an application scenario of a model that the user equipment can support, a size of the model, a type of the model, prediction latency of the model, and prediction accuracy of the model.
(7) The electronic device of clause (4), wherein the completion message further comprises the positioning result, causing the LMF to generate an adjustment message for adjusting a parameter or structure of a positioning model based at least on a comparison of the positioning result and real positioning data, the at least one memory and the computer program instructions being further configured to, via the at least one processor, cause the user equipment to:
   receive the adjustment message from the LMF via the AMF; and
   adjust the parameter or structure of the positioning model based on the adjustment message.
(8) An electronic device for a core network device in a core network, the electronic device comprising at least one processor and at least one memory including computer program instructions, wherein the at least one memory and the computer program instructions are configured to, via the at least one processor, cause the core network device to:
   perform training for a positioning model deployed at the core network device,
   wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.
(9) The electronic device of clause (8), wherein the auxiliary positioning data comprises at least one or more of an identifier of a cell to which the user equipment is connected, a time delay of a positioning reference signal transmitted by the user equipment measured by the network device, and phase information, an incident angle, a Doppler shift and timestamp information of the positioning reference signal of the user equipment.
(10) The electronic device of clause (8), wherein the core network device comprises a Location Management Function (LMF).
(11) The electronic device of clause (8), wherein the core network device comprises a Network Data Analytics Function (NWDAF).
(12) The electronic device of clause (10), wherein the at least one memory and the computer program instructions are further configured to, via the at least one processor, cause the core network device to:
   prior to performing training for the positioning model:
   send a request message for model training to a network device in the wireless communication system via an Access and Mobility Management Function (AMF) in the core network, the request message comprising a request for the auxiliary positioning data; and
   perform one of the following:
      after the network device causes the user equipment to measure strength of a positioning reference signal in response to the request message, receive the auxiliary positioning data comprising the strength of the positioning reference signal measured by the user equipment itself from the user equipment via the AMF; or
      after the network device measures strength of a channel sounding reference signal from the user equipment in response to the request message, receive the auxiliary positioning data comprising the strength of the channel sounding reference signal from the network device via the AMF;
      after performing training for the positioning model:
         send a completion message of the model training to the network device via the AMF, the completion message indicating confirmation that the training regarding the positioning model has been completed by the core network device.
(13) The electronic device of clause (11), wherein the at least one memory and the computer program instructions are further configured to, via the at least one processor, cause the core network device to:
   prior to performing training for the positioning model:
   in response to an indication from a Location Management Function (LMF) in the core network, send a request message for model training to a network device in the wireless communication system via an Access and Mobility Management Function (AMF) in the core network, the request message comprising a request for the auxiliary positioning data; and
   perform one of the following:
      after the network device causes the user equipment to measure strength of a positioning reference signal in response to the request message, receive the auxiliary positioning data comprising the strength of the positioning reference signal measured by the user equipment itself from the user equipment via the AMF; or
      after the network device measures strength of a channel sounding reference signal from the user equipment in response to the request message, receive the auxiliary positioning data comprising the strength of the channel sounding reference signal from the network device via the AMF;
      after performing training for the positioning model:
         send a completion message of the model training to the network device via the AMF, the completion message indicating confirmation that the training regarding the positioning model has been completed by the core network device.
(14) The electronic device of clause (12) or (13), wherein the request message further comprises a request for a user equipment capability of the user equipment, causing the network device further to obtain the user equipment capability of the user equipment from the user equipment in response to the request message, the at least one memory and the computer program instructions being further configured to, via the at least one processor, cause the core network device to:
   receive the user equipment capability from the network device via the AMF.
(15) The electronic device of clause (14), wherein the user equipment capability comprises one or more of a positioning method, a positioning model, accuracy of previous positioning, an application scenario of a model that the user equipment can support, a size of the model, a type of the model, prediction latency of the model, and prediction accuracy of the model.
(16) The electronic device of clause (10), wherein the at least one memory and the computer program instructions are further configured to, via the at least one processor, cause the core network device to:
   determine, based on LMF profile information, to switch from the LMF itself to another LMF in the core network for positioning of the user equipment,
   wherein the LMF profile information comprises at least an identifier of the LMF and an identifier or a functionality identifier of a supported positioning model, and an identifier of the another LMF and an identifier or a functionality identifier of a supported positioning model.
(17) The electronic device of clause (10), wherein the at least one memory and the computer program instructions are further configured to, via the at least one processor, cause the core network device to:
   send information associated with the positioning model to a Network Data Analytics Function (NWDAF) in the core network, causing the NWDAF to analyze the information to obtain positioning accuracy of the positioning model regarding the user equipment,
   wherein the information associated with the positioning model comprises at least an identifier or a functionality identifier of the positioning model.
(18) The electronic device of clause (1) or (8), wherein the training uses an artificial intelligence algorithm.
(19) The electronic device of clause (18), wherein the artificial intelligence algorithm comprises one or more of linear regression, logistic regression, a decision tree, naive Bayes, a support vector machine, a random forest, an artificial neural network, and K-nearest neighbor.
(20) An electronic device for a user equipment in a wireless communication system, the electronic device comprising at least one processor and at least one memory including computer program instructions, wherein the at least one memory and the computer program instructions are configured to, via the at least one processor, cause the user equipment to:
   send a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.
(21) The electronic device of clause (20), wherein the request message further comprises one or more of a number of trained models, and expected positioning accuracy.
(22) The electronic device of clause (20), wherein the plurality of positioning models are stored at the LMF.
(23) The electronic device of clause (20), wherein the plurality of positioning models are stored at an Analytics Data Repository Function (ADRF) in the core network, the ADRF being managed by a Network Data Analytics Function (NWDAF).
(24) The electronic device of clause (23), wherein the LMF sends a retrieval request for the plurality of positioning models stored at the ADRF to the NWDAF, causing the NWDAF to send an acknowledgment message for the retrieval request to the LMF in a case where it is determined that the plurality of positioning models are indeed stored at the ADRF.
(25) The electronic device of clause (22) or (24), wherein the at least one memory and the computer program instructions are further configured to, via the at least one processor, cause the user equipment to:
   after the LMF selects the one or more positioning models, receive a result message of the model selection from the LMF via the AMF, the result message comprising an identifier or a functionality identifier of the one or more positioning models.
(26) The electronic device of clause (22), wherein the at least one memory and the computer program instructions are further configured to, via the at least one processor, cause the user equipment to:
   after the LMF selects the one or more positioning models, download the one or more positioning models from the LMF by way of establishing a connection based on a positioning protocol message.
(27) The electronic device of clause (24), wherein the at least one memory and the computer program instructions are further configured to, via the at least one processor, cause the user equipment to:
   after the LMF selects the one or more positioning models, download the one or more positioning models from the ADRF by way of establishing a connection based on a positioning protocol message.
(28) The electronic device of clause (20), wherein the user equipment capability comprises one or more of an application scenario of a model that the user equipment can support, a size of the model, a type of the model, prediction latency of the model, and prediction accuracy of the model.
(29) The electronic device of clause (20), wherein the at least one memory and the computer program instructions are further configured to, via the at least one processor, cause the user equipment to:
   perform training for the positioning model deployed at the user equipment,
   wherein an input of the positioning model comprises at least auxiliary positioning data obtained by the user equipment from the LMF and strength of a positioning reference signal measured by the user equipment itself, and wherein an output of the positioning model comprises at least a positioning result of the user equipment.
(30) The electronic device of clause (20), wherein the at least one memory and the computer program instructions are further configured to, via the at least one processor, cause the user equipment to:
   send a request message for model switching of the positioning model deployed at the user equipment to the LMF via the AMF, the request message comprising at least the user equipment capability of the user equipment, causing the LMF to select one or more updated positioning models from the plurality of positioning models for deployment at the user equipment based at least on the request message.
(31) An electronic device for a user equipment in a wireless communication system, the electronic device comprising at least one processor and at least one memory including computer program instructions, wherein the at least one memory and the computer program instructions are configured to, via the at least one processor, cause the user equipment to:
   send a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.
(32) The electronic device of clause (31), wherein the request message is triggered based on the LMF in response to the accuracy of positioning information reported by the user equipment being lower than a threshold for a location service client.
(33) The electronic device of clause (31), wherein the request message further comprises one or more of a model previously used by the user equipment, a number of trained models, and expected positioning accuracy.
(34) The electronic device of clause (31), wherein the plurality of positioning models are stored at the LMF.
(35) The electronic device of clause (31), wherein the plurality of positioning models are stored at an Analytics Data Repository Function (ADRF) in the core network, the ADRF being managed by a Network Data Analytics Function (NWDAF).
(36) The electronic device of clause (35), wherein the LMF sends a retrieval request for the plurality of positioning models stored at the ADRF to the NWDAF, causing the NWDAF to send an acknowledgment message for the retrieval request to the LMF in a case where it is determined that the plurality of positioning models are indeed stored at the ADRF.
(37) The electronic device of clause (34) or (36), wherein the at least one memory and the computer program instructions are further configured to, via the at least one processor, cause the user equipment to:
   after the LMF selects the one or more updated positioning models, receive a result message of the model switching from the LMF via the AMF, the result message comprising an identifier or an updated functionality identifier of the one or more updated positioning models.
(38) The electronic device of clause (34), wherein the at least one memory and the computer program instructions are further configured to, via the at least one processor, cause the user equipment to:
   after the LMF selects the one or more updated positioning models, download the one or more updated positioning models from the LMF by way of establishing a connection based on a positioning protocol message.
(39) The electronic device of clause (36), wherein the at least one memory and the computer program instructions are further configured to, via the at least one processor, cause the user equipment to:
   after the LMF selects the one or more positioning models, download the one or more positioning models from the ADRF indicated by the LMF by way of establishing a connection based on a positioning protocol message.
(40) The electronic device of clause (31), wherein the user equipment capability comprises one or more of an application scenario of a model that the user equipment can support, a size of the model, a type of the model, prediction latency of the model, and prediction accuracy of the model.
(41) The electronic device of clause (31), wherein the at least one memory and the computer program instructions are further configured to, via the at least one processor, cause the user equipment to:
   perform training for the updated positioning model deployed at the user equipment,
   wherein an input of the updated positioning model comprises at least auxiliary positioning data obtained by the user equipment from the LMF and strength of a positioning reference signal measured by the user equipment itself, and wherein an output of the updated positioning model comprises at least a positioning result of the user equipment.
(42) An electronic device for a core network device in a core network, the electronic device comprising at least one processor and at least one memory including computer program instructions, wherein the at least one memory and the computer program instructions are configured to, via the at least one processor, cause the core network device to:
   determine, based on Location Management Function (LMF) profile information, to switch from a first LMF in the core network to a second LMF for positioning of a user equipment in a wireless communication system,
   wherein the LMF profile information comprises at least an identifier of the first LMF and an identifier or a functionality identifier of a supported positioning model, and an identifier of the second LMF and an identifier or a functionality identifier of a supported positioning model.
(43) The electronic device of clause (42), wherein the core network device comprises an Access and Mobility Management Function (AMF), the first LMF, or a Gateway Mobile Location Centre (GLMC).
(44) The electronic device of clause (42), wherein the switching is triggered based on the first LMF in response to the accuracy of positioning information reported by the user equipment being lower than a threshold for a location service client.
(45) An electronic device for a Location Management Function (LMF) in a core network, the electronic device comprising at least one processor and at least one memory including computer program instructions, wherein the at least one memory and the computer program instructions are configured to, via the at least one processor, cause the LMF to:
   send information associated with a positioning model to a Network Data Analytics Function (NWDAF) in the core network, causing the NWDAF to analyze the information to obtain positioning accuracy of the positioning model regarding a user equipment in a wireless communication system.
(46) The electronic device of clause (45), wherein the information associated with the positioning model comprises at least an identifier or a functionality identifier of the positioning model.
(47) The electronic device of clause (45), wherein the positioning model is deployed at the LMF or at the user equipment, and is trained using an artificial intelligence algorithm.
(48) The electronic device of clause (45), wherein the at least one memory and the computer program instructions are further configured to, via the at least one processor, cause the LMF to:
   perform training for the positioning model deployed at the LMF,
   wherein an input of the positioning model comprises at least auxiliary positioning data obtained by the LMF from a network device or the user equipment in the wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.
(49) The electronic device of clause (45), wherein the at least one memory and the computer program instructions are further configured to, via the at least one processor, cause the LMF to:
   determine, based on LMF profile information, to switch from the LMF itself to another LMF in the core network for positioning of the user equipment,
   wherein the LMF profile information comprises at least an identifier of the LMF and an identifier or a functionality identifier of a supported positioning model, and an identifier of the another LMF and an identifier or a functionality identifier of a supported positioning model.
(50) A method for a user equipment in a wireless communication system, the method comprising:
   performing training for a positioning model deployed at the user equipment,
   wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.
(51) A method for a core network device in a core network, the method comprising:
   performing training for a positioning model deployed at the core network device,
   wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.
(52) A method for a user equipment in a wireless communication system, the method comprising:
   sending a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.
(53) A method for a user equipment in a wireless communication system, the method comprising:
   sending a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.
(54) A method for a core network device in a core network, the method comprising:
   determining, based on Location Management Function (LMF) profile information, to switch from a first LMF in the core network to a second LMF for positioning of a user equipment in a wireless communication system,
   wherein the LMF profile information comprises at least an identifier of the first LMF and an identifier or a functionality identifier of a supported positioning model, and an identifier of the second LMF and an identifier or a functionality identifier of a supported positioning model.
(55) A method for a Location Management Function (LMF) in a core network, the method comprising:
   sending information associated with a positioning model to a Network Data Analytics Function (NWDAF) in the core network, causing the NWDAF to analyze the information to obtain positioning accuracy of the positioning model regarding a user equipment in a wireless communication system.
(56) A computer-readable storage medium having one or more executable instructions stored thereon, which, when executed by one or more processors of an electronic device, cause the electronic device to perform the method of any one of clauses (50) to (55).
(57) A computer program product comprising executable instructions, which, when executed by one or more processors of a computer, cause the computer to perform the method of any one of clauses (50) to (55).

It should be noted that the above application examples are merely exemplary. The embodiments of the present disclosure may also be executed in any other suitable manner in the above application examples, and the advantageous effects obtained by the embodiments of the present disclosure may still be achieved. Moreover, the embodiments of the present disclosure may also be applied to other similar application examples, and the advantageous effects obtained by the embodiments of the present disclosure may still be achieved.

It should be understood that machine-executable instructions in a machine-readable storage medium or program product according to embodiments of the present disclosure may be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

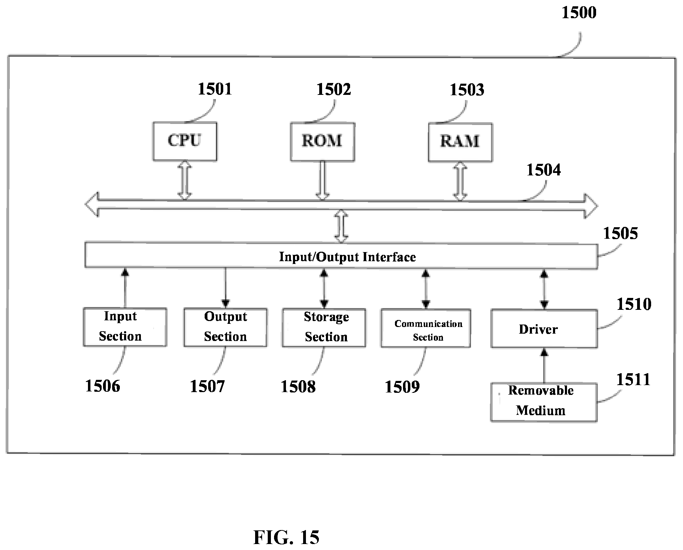

In addition, it should be understood that the series of processes and devices described above may also be implemented by software and/or firmware. In the case of being implemented by software and/or firmware, a program constituting the software is installed from a storage medium or a network to a computer having a dedicated hardware structure, for example, a general-purpose personal computer 1500 shown in FIG. 15, which, when installed with various programs, can perform various functions and the like. FIG. 15 is a block diagram showing an example structure of a personal computer as an information processing device that may be employed in an embodiment of the present disclosure. In one example, the personal computer may correspond to the above exemplary terminal device according to the present disclosure.

In FIG. 15, a central processing unit (CPU) 1501 executes various processes according to a program stored in a read only memory (ROM) 1502 or a program loaded from a storage section 1508 to a random-access memory (RAM) 1503. In the RAM 1503, data required when the CPU 1501 executes various processes and the like is also stored as necessary.

The CPU 1501, ROM 1502, and RAM 1503 are connected to each other via a bus 1504. The input/output interface 1505 is also connected to the bus 1504.

The following components are connected to the input/output interface 1505: an input section 1506 including a keyboard, a mouse, etc.; an output section 1507 including a display such as a cathode ray tube (CRT), a liquid crystal display (LCD), etc., and a speaker, etc.; a storage section 1508, including a hard disk, etc.; and a communication section 1509, including a network interface card such as a LAN card, a modem, and the like. The communication section 1509 performs communication processing via a network such as the Internet.

A drive 1510 is also connected to the input/output interface 1505 as needed. A removable medium 1511 such as a magnetic disk, an optical disk, a magneto-optical disk, a semiconductor memory, and the like is mounted on the drive 1510 as needed, so that a computer program read therefrom is installed into the storage section 1508 as needed.

In the case that the series of processing described above is implemented by software, a program constituting the software is installed from a network such as the Internet or a storage medium such as a removable medium 1511.

Those skilled in the art should understand that such a storage medium is not limited to the removable medium 1511 shown in FIG. 15 in which a program is stored and distributed separately from the device to provide the program to the user. Examples of the removable medium 1511 include a magnetic disk (including a floppy disk (registered trademark)), an optical disk (including a compact disk read-only memory (CD-ROM) and a digital versatile disk (DVD)), a magneto-optical disk (including a mini disc (MD) (registered trademark)) and a semiconductor memory. Alternatively, the storage medium may be the ROM 1502, a hard disk contained in the storage section 1508, or the like, in which programs are stored and distributed to users together with devices containing them.

The techniques of the present disclosure can be applied to various products.

For example, implementations according to the methods of the present disclosure may involve various network devices/base stations. For example, the electronic device 200 according to the embodiments of the present disclosure may be implemented as or included in various user equipment/terminal devices, and the methods shown in FIG. 9, 11, or 12 may also be implemented by various user equipment/terminal devices.

For example, the network device/base station mentioned in the present disclosure may be implemented as any type of base station, for example, an evolved Node B (gNB). A gNB may include one or more Transmit and Receive Points (TRPs). A user equipment may be connected to one or more TRPs within one or more gNBs. For example, a user equipment may be able to receive transmissions from multiple gNBs (and/or multiple TRPs provided by the same gNB). For example, a gNB can include a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as a NodeB and a Base Transceiver Station (BTS). The base station may include: a body (also referred to as a base station device) configured to control wireless communication; and one or more Remote Radio Heads (RRHs) disposed at a different place from the body. In addition, various types of terminals to be described below may each operate as a base station by temporarily or semi-permanently performing base station functions.

For example, the user equipment mentioned in the present disclosure, also referred to as a terminal device in some examples, may be implemented as a mobile terminal (such as a smart phone, a tablet personal computer (PC), a notebook PC, a portable game terminal, a portable/dongle type mobile router and a digital camera) or a vehicle-mounted terminal (such as a car navigation device). The user device may also be implemented as a terminal performing machine-to-machine (M2M) communication (also referred to as a machine type communication (MTC) terminal). In addition, the user device may be a wireless communication module (such as an integrated circuit module including a single wafer) mounted on each of the above terminals.In some cases, the user equipment may communicate using multiple wireless communication technologies. For example, the user equipment may be configured to communicate using two or more of GSM, UMTS, CDMA2000, WiMAX, LTE, LTE-A, WLAN, NR, Bluetooth, etc. In some cases, the user equipment may also be configured to communicate using only one wireless communication technology.

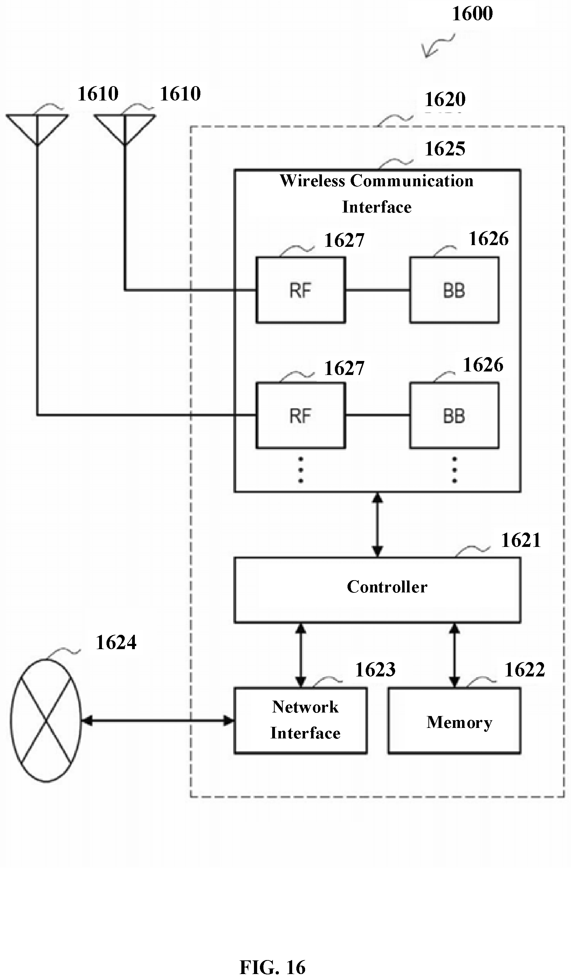

Examples according to the present disclosure will be described below with reference to FIGS. 16 to 19.

### Examples about Base Stations

It should be understood that the term base station in the present disclosure has its full breadth of ordinary meaning and at least includes a wireless communication station used as part of a wireless communication system or a radio system to facilitate communication. Examples of base stations may be, for example but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, or may be a corresponding network node in a future communication system (for example, a gNB, eLTE eNB, etc. that may be appearing in a 5G communication system). Part of the functions in the base stations of the present disclosure may also be implemented as an entity that has control functions for communication in D2D, M2M and V2V communication scenarios, or as an entity that plays a spectrum coordination role in cognitive radio communication scenarios.

### First Example

FIG. 16 is a block diagram showing a first example of a schematic configuration of a base station (gNB is used as an example in this figure) to which the technology of the present disclosure may be applied. The gNB 1600 includes multiple antennas 1610 and a base station device 1620. The base station device 1620 and each antenna 1610 may be connected to each other via an RF cable. In one implementation, the gNB 1600 (or the base station device 1620) here may correspond to the above network device.

Each of the antennas 1610 includes a single or multiple antenna elements (such as multiple antenna elements included in a Multiple Input Multiple Output (MIMO) antenna), and is used by the base station device 1620 to transmit and receive wireless signals. As shown in FIG. 16, the gNB 1600 may include multiple antennas 1610. For example, the multiple antennas 1610 may be compatible with multiple frequency bands used by the gNB 1600.

The base station device 1620 includes a controller 1621, a memory 1622, a network interface 1623 and a wireless communication interface 1625.

The controller 1621 may be, for example, a CPU or a DSP, and operates various functions of a higher layer of the base station device 1620. For example, the controller 1621 generates a data packet according to data in a signal processed by the wireless communication interface 1625 and transfers the generated packet via the network interface 1623. The controller 1621 may bundle data from a plurality of baseband processors to generate a bundled packet, and transfer the generated bundled packet. The controller 1621 may have logic functions to perform controls such as radio resource control, radio bearer control, mobility management, admission control and scheduling. These controls may be performed in conjunction with nearby gNBs or core network nodes. The memory 1622 includes RAM and ROM, and stores programs executed by the controller 1621 and various types of control data (such as a terminal list, transmission power data, and scheduling data).

The network interface 1623 is a communication interface for connecting the base station device 1620 to the core network 1624. The controller 1621 may communicate with a core network node or further gNB via the network interface 1623. In this case, the gNB 1600 and core network nodes or other gNBs may be connected to each other through logical interfaces (such as S1 interface and X2 interface). The network interface 1623 may also be a wired communication interface or a wireless communication interface for wireless backhaul. If the network interface 1623 is a wireless communication interface, the network interface 1923 may use a higher frequency band for wireless communication than that used by the wireless communication interface 1625.

The wireless communication interface 1625 supports any cellular communication scheme (such as Long-Term Evolution (LTE) and LTE-Advanced), and provides a wireless connection to a terminal located in a cell of the gNB 1600 via the antenna 1610. The wireless communication interface 1625 may generally include, for example, a baseband (BB) processor 1626 and an RF circuit 1627. The BB processor 1626 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1621, the BB processor 1626 may have part or all of the logic functions described above. The BB processor 1626 may be a memory storing a communication control program, or a module including a processor and related circuits configured to execute the program. Updating the program may cause the functionality of the BB processor 1626 to change. The module may be a card or a blade inserted into a slot of the base station device 1620. Alternatively, the module may also be a chip mounted on a card or blade. Meanwhile, the RF circuit 1627 may include, for example, a mixer, a filter, and an amplifier, and transmit and receive wireless signals via the antenna 1610. Although FIG. 16 illustrates an example in which one RF circuit 1627 is connected to one antenna 1610, the present disclosure is not limited to this, instead, one RF circuit 1627 may be connected to multiple antennas 1610 at the same time.

As shown in FIG. 16, the wireless communication interface 1625 may include multiple BB processors 1626. For example, the multiple BB processors 1626 may be compatible with multiple frequency bands used by the gNB 1600. As shown in FIG. 16, the wireless communication interface 1625 may include multiple RF circuits 1627. For example, the multiple RF circuits 1627 may be compatible with multiple antenna elements. Although FIG. 16 illustrates an example in which the wireless communication interface 1625 includes multiple BB processors 1626 and multiple RF circuits 1627, the wireless communication interface 1625 may also include a single BB processor 1626 or a single RF circuit 1627.

### Second Example

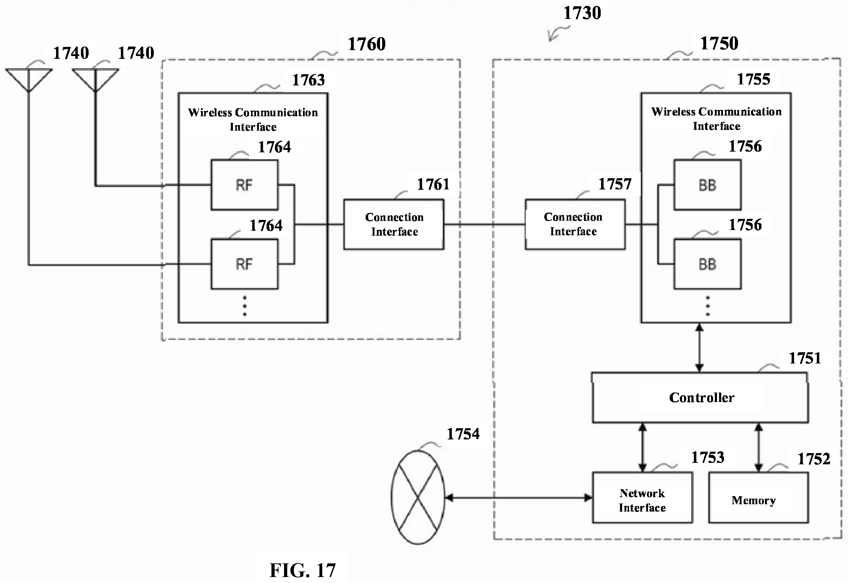

FIG. 17 is a block diagram showing a second example of a schematic configuration of a base station (gNB is used as an example in this figure) to which the technology of the present disclosure may be applied. The gNB 1730 includes multiple antennas 1740, a base station device 1750 and a RRH 1760. The RRH 1760 and each antenna 1740 may be connected to each other via RF cables. The base station device 1750 and the RRH 1760 may be connected to each other via a high-speed line such as an optical fiber cable. In one implementation, the gNB 1730 (or the base station device 1750) here may correspond to the above network device.

Each of the antennas 1740 may include a single or multiple antenna elements (such as multiple antenna elements included in a MIMO antenna), and is used by the RRH 1760 to transmit and receive wireless signals. As shown in FIG. 17, the gNB 1730 may include multiple antennas 1740. For example, the multiple antennas 1740 may be compatible with multiple frequency bands used by the gNB 1730.

The base station device 1750 includes a controller 1751, a memory 1752, a network interface 1753, a wireless communication interface 1755 and a connection interface 1757. The controller 1751, the memory 1752, and the network interface 1753 are the same as the controller 1621, the memory 1622, and the network interface 1623 described with reference to FIG. 16.

The wireless communication interface 1755 supports any cellular communication scheme (such as LTE and LTE-Advanced), and provides wireless communication to terminals located in a sector corresponding to the RRH 1760 via the RRH 1760 and the antenna 1740. The wireless communication interface 1755 may generally include, for example, a BB processor 1756. The BB processor 1756 is the same as the BB processor 1426 described with reference to FIG. 16, except that the BB processor 1756 is connected to the RF circuit 1764 of the RRH 1760 via the connection interface 1757. As shown in FIG. 17, the wireless communication interface 1755 may include multiple BB processors 1756. For example, the multiple BB processors 1756 may be compatible with multiple frequency bands used by the gNB 1730. Although FIG. 17 illustrates an example in which the wireless communication interface 1755 includes multiple BB processors 1756, the wireless communication interface 1755 may also include a single BB processor 1756.

The connection interface 1757 is an interface for connecting the base station device 1750 (the wireless communication interface 1755) to the RRH 1760. The connection interface 1757 may also be a communication module for communication in the above high-speed line connecting the base station device 1750 (the wireless communication interface 1755) to the RRH 1760.

The RRH 1760 includes a connection interface 1761 and a wireless communication interface 1763.

The connection interface 1761 is an interface for connecting the RRH 1760 (the wireless communication interface 1763) to the base station device 1750. The connection interface 1761 may also be a communication module for communication in the above high-speed line.

The wireless communication interface 1763 transmits and receives wireless signals via the antenna 1740. The wireless communication interface 1763 may generally include an RF circuit 1764, for example. The RF circuit 1764 may include, for example, a mixer, a filter, and an amplifier, and transmits and receives wireless signals via the antenna 1740. Although FIG. 17 illustrates an example in which one RF circuit 1764 is connected to one antenna 1740, the present disclosure is not limited to this, instead, one RF circuit 1764 may be connected to multiple antennas 1740 at the same time.

As shown in FIG. 17, the wireless communication interface 1763 may include multiple RF circuits 1764. For example, the multiple RF circuits 1764 may support multiple antenna elements. Although FIG. 17 illustrates an example in which the wireless communication interface 1763 includes multiple RF circuits 1764, the wireless communication interface 1763 may also include a single RF circuit 1764.

### Example about User Devices

### First Example

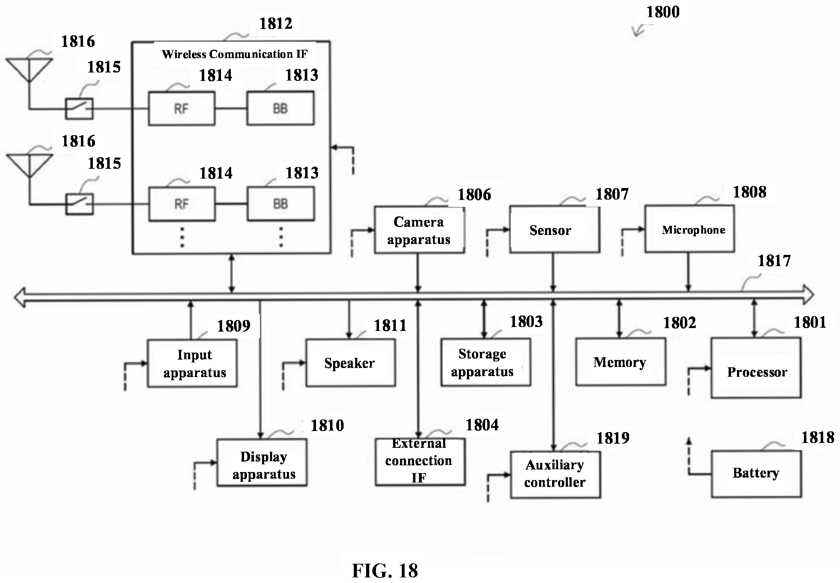

FIG. 18 is a block diagram showing an example of a schematic configuration of a smart phone 1800 to which the technology of the present disclosure may be applied. The smart phone 1800 includes a processor 1801, a memory 1802, a storage apparatus 1803, an external connection interface 1804, a camera apparatus 1806, a sensor 1807, a microphone 1808, an input apparatus 1809, a display apparatus 1810, a speaker 1811, a wireless communication interface 1812, one or more antenna switches 1815, one or more antennas 1816, a bus 1817, a battery 1818, and an auxiliary controller 1819. In one implementation, the smart phone 1800 (or the processor 1801) here may correspond to the above user equipment (or more specifically, electronic device 200).

The processor 1801 may be, for example, a CPU or a system on chip (SoC), and controls functions of an application layer and further layers of the smart phone 1800. The memory 1802 includes RAM and ROM, and stores data and programs executed by the processor 1801. The storage apparatus 1803 may include a storage medium such as a semiconductor memory and a hard disk. The external connection interface 1804 is an interface for connecting an external apparatus (such as a memory card and a universal serial bus (USB) apparatus) to the smart phone 1800.

The camera apparatus 1806 includes an image sensor (such as a charge coupled device (CCD) and a complementary metal oxide semiconductor (CMOS)), and generates captured images. The sensor 1807 may include a set of sensors, such as a measurement sensor, a gyro sensor, a geomagnetic sensor, and an acceleration sensor. The microphone 1808 converts sound input to the smart phone 1800 into an audio signal. The input apparatus 1809 includes, for example, a touch sensor configured to detect a touch on the screen of the display apparatus 1810, a keypad, a keyboard, a button, or a switch, and receives operations or information input from a user. The display apparatus 1810 includes a screen (such as a liquid crystal display (LCD) and an organic light emitting diode (OLED) display), and displays an output image of the smart phone 1800. The speaker 1811 converts an audio signal output from the smart phone 1800 into sound.

The wireless communication interface 1812 supports any cellular communication scheme (such as LTE and LTE-Advanced), and performs wireless communication. The wireless communication interface 1812 may generally include, for example, a BB processor 1813 and an RF circuit 1814. The BB processor 1813 may perform, for example, encoding/decoding, modulation/demodulation, and multiplexing/demultiplexing, and perform various types of signal processing for wireless communication. Meanwhile, the RF circuit 1814 may include, for example, a mixer, a filter, and an amplifier, and transmit and receive wireless signals via the antenna 1816. The wireless communication interface 1812 may be a chip module on which a BB processor 1813 and an RF circuit 1814 are integrated. As shown in FIG. 18, the wireless communication interface 1812 may include multiple BB processors 1813 and multiple RF circuits 1814. Although FIG. 18 illustrates an example in which the wireless communication interface 1812 includes multiple BB processors 1813 and multiple RF circuits 1814, the wireless communication interface 1812 may include a single BB processor 1813 or a single RF circuit 1814.

Furthermore, the wireless communication interface 1812 may support another type of wireless communication scheme, such as a short-range wireless communication scheme, a near field communication scheme, and a wireless local area network (LAN) scheme, in addition to the cellular communication schemes. In this case, the wireless communication interface 1812 may include a BB processor 1813 and an RF circuit 1814 for each wireless communication scheme.

Each of the antenna switches 1815 switches the connection destination of the antenna 1816 among a plurality of circuits (e.g., circuits for different wireless communication schemes) included in the wireless communication interface 1812.

Each of the antennas 1816 includes a single or multiple antenna elements (such as multiple antenna elements included in a MIMO antenna), and is used for the wireless communication interface 1812 to transmit and receive wireless signals. As shown in FIG. 18, the smart phone 1800 may include multiple antennas 1816. Although FIG. 18 shows an example in which the smart phone 1800 includes multiple antennas 1816, the smart phone 1800 may also include a single antenna 1816.

In addition, the smart phone 1800 may include an antenna 1816 for each wireless communication scheme. In this case, the antenna switch 1815 may be omitted from the configuration of the smart phone 1800.

The bus 1817 connects the processor 1801, the memory 1802, the storage apparatus 1803, the external connection interface 1804, the camera apparatus 1806, the sensor 1807, the microphone 1808, the input apparatus 1809, the display apparatus 1810, the speaker 1811, the wireless communication interface 1812, and the auxiliary controller 1819 to each other. The battery 1818 provides power to the various blocks of the smart phone 1800 shown in FIG. 18 via feed lines, which are partially shown as dashed lines in the figure. The auxiliary controller 1819 operates minimum necessary functions of the smart phone 1800, for example, in a sleep mode.

In the smart phone 1800 shown in FIG. 18, the communication unit 202 such as in FIG. 2 may be implemented by the wireless communication interface 1812; the processing unit 204 may be implemented by the processor 1801 or the auxiliary controller 1819.

### Second Example

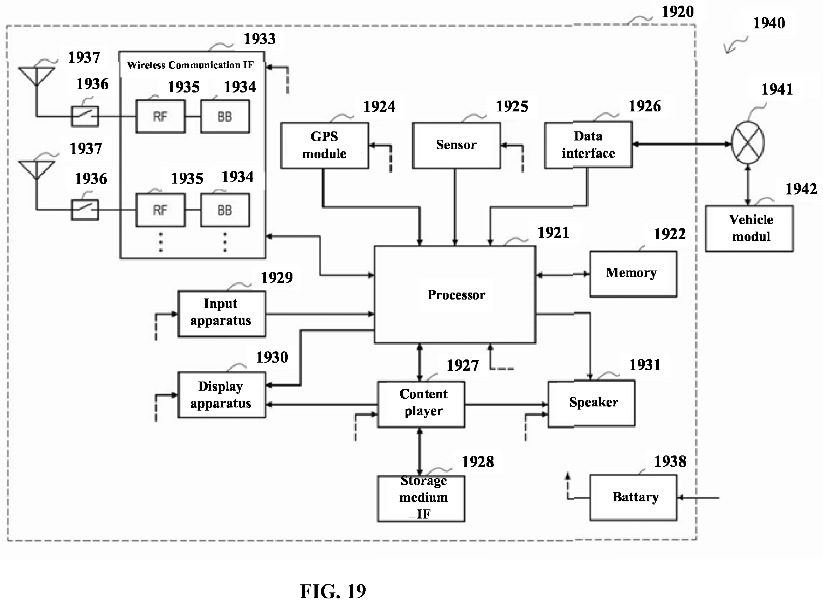

FIG. 19 is a block diagram showing an example of a schematic configuration of a car navigation device 1920 to which the technology of the present disclosure may be applied. The car navigation device 1920 includes a processor 1921, a memory 1922, a global positioning system (GPS) module 1924, a sensor 1925, a data interface 1926, a content player 1927, a storage medium interface 1928, an input apparatus 1929, a display apparatus 1930, a speaker 1931, a wireless communication interface 1933, one or more antenna switches 1936, one or more antennas 1937, and a battery 1938. In one implementation, the car navigation device 1920 (or the processor 1921) here may correspond to the above user equipment (or more specifically, electronic device 200).

The processor 1921 may be, for example, a CPU or a SoC, and controls a navigation function and other functions of the car navigation device 1920. The memory 1922 includes RAM and ROM, and stores data and programs executed by the processor 1921.

The GPS module 1924 measures the location (such as latitude, longitude, and altitude) of the car navigation device 1920 using GPS signals received from GPS satellites. The sensor 1925 may include a set of sensors such as a gyro sensor, a geomagnetic sensor, and an air pressure sensor. The data interface 1926 is connected to, for example, an in-vehicle network 1941 via a terminal not shown, and acquires data (such as vehicle speed data) generated by the vehicle.

The content player 1927 reproduces content stored in storage medium (such as a CD and a DVD), which is inserted into the storage medium interface 1928. The input apparatus 1929 includes, for example, a touch sensor configured to detect a touch on the screen of the display apparatus 1930, a button, or a switch, and receives operations or information input from a user. The display apparatus 1930 includes a screen such as an LCD or OLED display, and displays an image of a navigation function or reproduced content. The speaker 1931 outputs sound of the navigation function or reproduced content.

The wireless communication interface 1933 supports any cellular communication scheme (such as LTE and LTE-Advanced), and performs wireless communication. The wireless communication interface 1933 may generally include, for example, a BB processor 1934 and an RF circuit 1935. The BB processor 1934 may perform, for example, encoding/decoding, modulation/demodulation, and multiplexing/demultiplexing, and perform various types of signal processing for wireless communication. Meanwhile, the RF circuit 1935 may include, for example, a mixer, a filter, and an amplifier, and transmit and receive wireless signals via the antenna 1937. The wireless communication interface 1933 may also be a chip module on which the BB processor 1934 and the RF circuit 1935 are integrated. As shown in FIG. 19, the wireless communication interface 1933 may include multiple BB processors 1934 and multiple RF circuits 1935. Although FIG. 19 illustrates an example in which the wireless communication interface 1933 includes multiple BB processors 1934 and multiple RF circuits 1935, the wireless communication interface 1933 may also include a single BB processor 1934 or a single RF circuit 1935.

Furthermore, the wireless communication interface 1933 may support another type of wireless communication scheme, such as a short-range wireless communication scheme, a near field communication scheme, and a wireless LAN scheme, in addition to the cellular communication schemes. In this case, the wireless communication interface 1933 may include the BB processor 1934 and the RF circuit 1935 for each wireless communication scheme.

Each of the antenna switches 1936 switches the connection destination of the antenna 1937 among a plurality of circuits (such as circuits for different wireless communication schemes) included in the wireless communication interface 1933.

Each of the antennas 1937 includes a single or multiple antenna elements (such as multiple antenna elements included in a MIMO antenna), and is used for the wireless communication interface 1933 to transmit and receive wireless signals. As shown in FIG. 19, the car navigation device 1920 may include multiple antennas 1937. Although FIG. 19 illustrates an example in which the car navigation device 1920 includes multiple antennas 1937, the car navigation device 1920 may also include a single antenna 1937.

Furthermore, the car navigation device 1920 may include an antenna 1937 for each wireless communication scheme. In this case, the antenna switch 1936 may be omitted from the configuration of the car navigation device 1920.

The battery 1938 provides power to various blocks of the car navigation device 1920 shown in FIG. 19 via feeder lines, which are partially shown as dashed lines in the figure. The battery 1938 accumulates electric power supplied from the vehicle.

In the car navigation device 1920 shown in FIG. 19, the communication unit 202 such as in FIG. 2, may be implemented by the wireless communication interface 1933; the processing unit 204 may be implemented by the processor 1921.

The technology of the present disclosure may also be implemented as an in-vehicle system (or vehicle) 1940 including one or more blocks of the car navigation device 1920, the in-vehicle network 1941, and the vehicle module 1942. The vehicle module 1942 generates vehicle data (such as vehicle speed, engine speed, and fault information), and outputs the generated data to the in-vehicle network 1941.

The exemplary embodiments of the present disclosure have been described above with reference to the accompanying drawings, but the present disclosure is of course not limited to the above examples. Those skilled in the art may find various alterations and modifications within the scope of the appended claims, and it should be understood that these alterations and modifications will naturally fall within the technical scope of the present disclosure.

For example, a plurality of functions included in one unit in the above embodiments may be implemented by separate apparatus. Alternatively, the plurality of functions implemented by multiple units in the above embodiments may be implemented by separate apparatus, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order may be appropriately changed.
Although the present disclosure and its advantages have been described in detail, it should be understood that various changes, substitutions and alterations may be made herein without departing from the spirit and scope of the present disclosure as defined by the appended claims. Furthermore, the terms "comprise", "include" or any other variation thereof in embodiments of the present disclosure are intended to encompass a non-exclusive inclusion, such that a process, method, article or device comprising a series of elements includes not only those elements, but also include other elements not expressly listed, or include elements inherent to such a process, method, article or device. Without further limitation, an element defined by the phrase "comprising one..." does not preclude the presence of additional identical elements in a process, method, article or device that includes the element.

## Claims

1. An electronic device for a user equipment in a wireless communication system, the electronic device comprising at least one processor and at least one memory including computer program instructions, wherein the at least one memory and the computer program instructions are configured to, via the at least one processor, cause the user equipment to:
perform training for a positioning model deployed at the user equipment,
wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.

2. The electronic device of claim 1, wherein the positioning result comprises one of an inferred positioning result and a direct positioning result.

3. The electronic device of claim 1, wherein the auxiliary positioning data comprises at least one or more of a positioning application scenario, expected positioning accuracy, an inference duration, and training data reliability.

4. The electronic device of claim 2, wherein the at least one memory and the computer program instructions are further configured to, via the at least one processor, cause the user equipment to:
receive a request message for model training from the LMF via an Access and Mobility Management Function (AMF) in the core network prior to performing training for the positioning model, the request message comprising at least the auxiliary positioning data; and
after performing training for the positioning model, send a completion message of the model training to the LMF via the AMF, the completion message indicating confirmation that the training regarding the positioning model has been completed by the user equipment.

5. The electronic device of claim 4, wherein the request message further comprises a request for a user equipment capability of the user equipment, and wherein the completion message further comprises the user equipment capability.

6. The electronic device of claim 5, wherein the user equipment capability comprises one or more of an application scenario of a model that the user equipment can support, a size of the model, a type of the model, prediction latency of the model, and prediction accuracy of the model.

7. The electronic device of claim 4, wherein the completion message further comprises the positioning result, causing the LMF to generate an adjustment message for adjusting a parameter or structure of a positioning model based at least on a comparison of the positioning result and real positioning data, the at least one memory and the computer program instructions being further configured to, via the at least one processor, cause the user equipment to:
receive the adjustment message from the LMF via the AMF; and
adjust the parameter or structure of the positioning model based on the adjustment message.

8. An electronic device for a core network device in a core network, the electronic device comprising at least one processor and at least one memory including computer program instructions, wherein the at least one memory and the computer program instructions are configured to, via the at least one processor, cause the core network device to:
perform training for a positioning model deployed at the core network device,
wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.

9. The electronic device of claim 8, wherein the auxiliary positioning data comprises at least one or more of an identifier of a cell to which the user equipment is connected, a time delay of a positioning reference signal transmitted by the user equipment measured by the network device, and phase information, an incident angle, a Doppler shift and timestamp information of the positioning reference signal of the user equipment.

10. The electronic device of claim 8, wherein the core network device comprises a Location Management Function (LMF).

11. The electronic device of claim 8, wherein the core network device comprises a Network Data Analytics Function (NWDAF).

12. The electronic device of claim 10, wherein the at least one memory and the computer program instructions are further configured to, via the at least one processor, cause the core network device to:
prior to performing training for the positioning model:
send a request message for model training to a network device in the wireless communication system via an Access and Mobility Management Function (AMF) in the core network, the request message comprising a request for the auxiliary positioning data; and
perform one of the following:
after the network device causes the user equipment to measure strength of a positioning reference signal in response to the request message, receive the auxiliary positioning data comprising the strength of the positioning reference signal measured by the user equipment itself from the user equipment via the AMF; or
after the network device measures strength of a channel sounding reference signal from the user equipment in response to the request message, receive the auxiliary positioning data comprising the strength of the channel sounding reference signal from the network device via the AMF;
after performing training for the positioning model:
send a completion message of the model training to the network device via the AMF, the completion message indicating confirmation that the training regarding the positioning model has been completed by the core network device.

13. The electronic device of claim 11, wherein the at least one memory and the computer program instructions are further configured to, via the at least one processor, cause the core network device to:
prior to performing training for the positioning model:
in response to an indication from a Location Management Function (LMF) in the core network, send a request message for model training to a network device in the wireless communication system via an Access and Mobility Management Function (AMF) in the core network, the request message comprising a request for the auxiliary positioning data; and
perform one of the following:
after the network device causes the user equipment to measure strength of a positioning reference signal in response to the request message, receive the auxiliary positioning data comprising the strength of the positioning reference signal measured by the user equipment itself from the user equipment via the AMF; or
after the network device measures strength of a channel sounding reference signal from the user equipment in response to the request message, receive the auxiliary positioning data comprising the strength of the channel sounding reference signal from the network device via the AMF;
after performing training for the positioning model:
send a completion message of the model training to the network device via the AMF, the completion message indicating confirmation that the training regarding the positioning model has been completed by the core network device.

14. The electronic device of claim 12 or 13, wherein the request message further comprises a request for a user equipment capability of the user equipment, causing the network device further to obtain the user equipment capability of the user equipment from the user equipment in response to the request message, the at least one memory and the computer program instructions being further configured to, via the at least one processor, cause the core network device to:
receive the user equipment capability from the network device via the AMF.

15. The electronic device of claim 14, wherein the user equipment capability comprises one or more of a positioning method, a positioning model, accuracy of previous positioning, an application scenario of a model that the user equipment can support, a size of the model, a type of the model, prediction latency of the model, and prediction accuracy of the model.

16. The electronic device of claim 10, wherein the at least one memory and the computer program instructions are further configured to, via the at least one processor, cause the core network device to:
determine, based on LMF profile information, to switch from the LMF itself to another LMF in the core network for positioning of the user equipment,
wherein the LMF profile information comprises at least an identifier of the LMF and an identifier or a functionality identifier of a supported positioning model, and an identifier of the another LMF and an identifier or a functionality identifier of a supported positioning model.

17. The electronic device of claim 10, wherein the at least one memory and the computer program instructions are further configured to, via the at least one processor, cause the core network device to:
send information associated with the positioning model to a Network Data Analytics Function (NWDAF) in the core network, causing the NWDAF to analyze the information to obtain positioning accuracy of the positioning model regarding the user equipment,
wherein the information associated with the positioning model comprises at least an identifier or a functionality identifier of the positioning model.

18. The electronic device of claim 1 or 8, wherein the training uses an artificial intelligence algorithm.

19. The electronic device of claim 18, wherein the artificial intelligence algorithm comprises one or more of linear regression, logistic regression, a decision tree, naive Bayes, a support vector machine, a random forest, an artificial neural network, and K-nearest neighbor.

20. An electronic device for a user equipment in a wireless communication system, the electronic device comprising at least one processor and at least one memory including computer program instructions, wherein the at least one memory and the computer program instructions are configured to, via the at least one processor, cause the user equipment to:
send a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.

21. The electronic device of claim 20, wherein the request message further comprises one or more of a number of trained models, and expected positioning accuracy.

22. The electronic device of claim 20, wherein the plurality of positioning models are stored at the LMF.

23. The electronic device of claim 20, wherein the plurality of positioning models are stored at an Analytics Data Repository Function (ADRF) in the core network, the ADRF being managed by a Network Data Analytics Function (NWDAF).

24. The electronic device of claim 23, wherein the LMF sends a retrieval request for the plurality of positioning models stored at the ADRF to the NWDAF, causing the NWDAF to send an acknowledgment message for the retrieval request to the LMF in a case where it is determined that the plurality of positioning models are indeed stored at the ADRF.

25. The electronic device of claim 22 or 24, wherein the at least one memory and the computer program instructions are further configured to, via the at least one processor, cause the user equipment to:
after the LMF selects the one or more positioning models, receive a result message of the model selection from the LMF via the AMF, the result message comprising an identifier or a functionality identifier of the one or more positioning models.

26. The electronic device of claim 22, wherein the at least one memory and the computer program instructions are further configured to, via the at least one processor, cause the user equipment to:
after the LMF selects the one or more positioning models, download the one or more positioning models from the LMF by way of establishing a connection based on a positioning protocol message.

27. The electronic device of claim 24, wherein the at least one memory and the computer program instructions are further configured to, via the at least one processor, cause the user equipment to:
after the LMF selects the one or more positioning models, download the one or more positioning models from the ADRF by way of establishing a connection based on a positioning protocol message.

28. The electronic device of claim 20, wherein the user equipment capability comprises one or more of an application scenario of a model that the user equipment can support, a size of the model, a type of the model, prediction latency of the model, and prediction accuracy of the model.

29. The electronic device of claim 20, wherein the at least one memory and the computer program instructions are further configured to, via the at least one processor, cause the user equipment to:
perform training for the positioning model deployed at the user equipment,
wherein an input of the positioning model comprises at least auxiliary positioning data obtained by the user equipment from the LMF and strength of a positioning reference signal measured by the user equipment itself, and wherein an output of the positioning model comprises at least a positioning result of the user equipment.

30. The electronic device of claim 20, wherein the at least one memory and the computer program instructions are further configured to, via the at least one processor, cause the user equipment to:
send a request message for model switching of the positioning model deployed at the user equipment to the LMF via the AMF, the request message comprising at least the user equipment capability of the user equipment, causing the LMF to select one or more updated positioning models from the plurality of positioning models for deployment at the user equipment based at least on the request message.

31. An electronic device for a user equipment in a wireless communication system, the electronic device comprising at least one processor and at least one memory including computer program instructions, wherein the at least one memory and the computer program instructions are configured to, via the at least one processor, cause the user equipment to:
send a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.

32. The electronic device of claim 31, wherein the request message is triggered based on the LMF in response to the accuracy of positioning information reported by the user equipment being lower than a threshold for a location service client.

33. The electronic device of claim 31, wherein the request message further comprises one or more of a model previously used by the user equipment, a number of trained models, and expected positioning accuracy.

34. The electronic device of claim 31, wherein the plurality of positioning models are stored at the LMF.

35. The electronic device of claim 31, wherein the plurality of positioning models are stored at an Analytics Data Repository Function (ADRF) in the core network, the ADRF being managed by a Network Data Analytics Function (NWDAF).

36. The electronic device of claim 35, wherein the LMF sends a retrieval request for the plurality of positioning models stored at the ADRF to the NWDAF, causing the NWDAF to send an acknowledgment message for the retrieval request to the LMF in a case where it is determined that the plurality of positioning models are indeed stored at the ADRF.

37. The electronic device of claim 34 or 36, wherein the at least one memory and the computer program instructions are further configured to, via the at least one processor, cause the user equipment to:
after the LMF selects the one or more updated positioning models, receive a result message of the model switching from the LMF via the AMF, the result message comprising an identifier or an updated functionality identifier of the one or more updated positioning models.

38. The electronic device of claim 34, wherein the at least one memory and the computer program instructions are further configured to, via the at least one processor, cause the user equipment to:
after the LMF selects the one or more updated positioning models, download the one or more updated positioning models from the LMF by way of establishing a connection based on a positioning protocol message.

39. The electronic device of claim 36, wherein the at least one memory and the computer program instructions are further configured to, via the at least one processor, cause the user equipment to:
after the LMF selects the one or more positioning models, download the one or more positioning models from the ADRF indicated by the LMF by way of establishing a connection based on a positioning protocol message.

40. The electronic device of claim 31, wherein the user equipment capability comprises one or more of an application scenario of a model that the user equipment can support, a size of the model, a type of the model, prediction latency of the model, and prediction accuracy of the model.

41. The electronic device of claim 31, wherein the at least one memory and the computer program instructions are further configured to, via the at least one processor, cause the user equipment to:
perform training for the updated positioning model deployed at the user equipment,
wherein an input of the updated positioning model comprises at least auxiliary positioning data obtained by the user equipment from the LMF and strength of a positioning reference signal measured by the user equipment itself, and wherein an output of the updated positioning model comprises at least a positioning result of the user equipment.

42. An electronic device for a core network device in a core network, the electronic device comprising at least one processor and at least one memory including computer program instructions, wherein the at least one memory and the computer program instructions are configured to, via the at least one processor, cause the core network device to:
determine, based on Location Management Function (LMF) profile information, to switch from a first LMF in the core network to a second LMF for positioning of a user equipment in a wireless communication system,
wherein the LMF profile information comprises at least an identifier of the first LMF and an identifier or a functionality identifier of a supported positioning model, and an identifier of the second LMF and an identifier or a functionality identifier of a supported positioning model.

43. The electronic device of claim 42, wherein the core network device comprises an Access and Mobility Management Function (AMF), the first LMF, or a Gateway Mobile Location Centre (GLMC).

44. The electronic device of claim 42, wherein the switching is triggered based on the first LMF in response to the accuracy of positioning information reported by the user equipment being lower than a threshold for a location service client.

45. An electronic device for a Location Management Function (LMF) in a core network, the electronic device comprising at least one processor and at least one memory including computer program instructions, wherein the at least one memory and the computer program instructions are configured to, via the at least one processor, cause the LMF to:
send information associated with a positioning model to a Network Data Analytics Function (NWDAF) in the core network, causing the NWDAF to analyze the information to obtain positioning accuracy of the positioning model regarding a user equipment in a wireless communication system.

46. The electronic device of claim 45, wherein the information associated with the positioning model comprises at least an identifier or a functionality identifier of the positioning model.

47. The electronic device of claim 45, wherein the positioning model is deployed at the LMF or at the user equipment, and is trained using an artificial intelligence algorithm.

48. The electronic device of claim 45, wherein the at least one memory and the computer program instructions are further configured to, via the at least one processor, cause the LMF to:
perform training for the positioning model deployed at the LMF,
wherein an input of the positioning model comprises at least auxiliary positioning data obtained by the LMF from a network device or the user equipment in the wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.

49. The electronic device of claim 45, wherein the at least one memory and the computer program instructions are further configured to, via the at least one processor, cause the LMF to:
determine, based on LMF profile information, to switch from the LMF itself to another LMF in the core network for positioning of the user equipment,
wherein the LMF profile information comprises at least an identifier of the LMF and an identifier or a functionality identifier of a supported positioning model, and an identifier of the another LMF and an identifier or a functionality identifier of a supported positioning model.

50. A method for a user equipment in a wireless communication system, the method comprising:
performing training for a positioning model deployed at the user equipment,
wherein an input of the positioning model comprises at least auxiliary positioning data obtained by the user equipment from a Location Management Function (LMF) in a core network and strength of a positioning reference signal measured by the user equipment itself, and wherein an output of the positioning model comprises at least a positioning result of the user equipment.

51. A method for a core network device in a core network, the method comprising:
performing training for a positioning model deployed at the core network device,
wherein an input of the positioning model comprises at least auxiliary positioning data obtained by the core network device from a network device or a user equipment in a wireless communication system, the auxiliary positioning data correspondingly comprising at least strength of a channel sounding reference signal from the user equipment measured by the network device or strength of a positioning reference signal measured by the user equipment itself, and wherein an output of the positioning model comprises at least a positioning result of the user equipment.

52. A method for a user equipment in a wireless communication system, the method comprising:
sending a request message for model selection of a positioning model deployed at the user equipment to a Location Management Function (LMF) in a core network via an Access and Mobility Management Function (AMF) in the core network, the request message comprising at least a user equipment capability of the user equipment, causing the LMF to select one or more positioning models from a plurality of positioning models for deployment at the user equipment based at least on the request message.

53. A method for a user equipment in a wireless communication system, the method comprising:
sending a request message for model switching of a positioning model deployed at the user equipment to a Location Management Function (LMF) in a core network via an Access and Mobility Management Function (AMF) in the core network, the request message comprising at least a user equipment capability of the user equipment, causing the LMF to select one or more updated positioning models from a plurality of positioning models for deployment at the user equipment based at least on the request message.

54. A method for a core network device in a core network, the method comprising:
determining, based on Location Management Function (LMF) profile information, to switch from a first LMF in the core network to a second LMF for positioning of a user equipment in a wireless communication system,
wherein the LMF profile information comprises at least an identifier of the first LMF and an identifier or a functionality identifier of a supported positioning model, and an identifier of the second LMF and an identifier or a functionality identifier of a supported positioning model.

55. A method for a Location Management Function (LMF) in a core network, the method comprising:
sending information associated with a positioning model to a Network Data Analytics Function (NWDAF) in the core network, causing the NWDAF to analyze the information to obtain positioning accuracy of the positioning model regarding a user equipment in a wireless communication system.

56. A computer-readable storage medium having one or more executable instructions stored thereon, which, when executed by one or more processors of an electronic device, cause the electronic device to perform the method of any one of claims 50 to 55.

57. A computer program product comprising executable instructions, which, when executed by one or more processors of a computer, cause the computer to perform the method of any one of claims 50 to 55.
